# EUROPEAN PATENT SPECIFICATION

(11) **EP 2 779 285 B1**
(45) Date of publication and mention of the grant of the patent: **04.01.2017**
(21) Application number: 12847868.2
(22) Date of filing: 24.10.2012
(51) Int. Cl.: H01M 4/525, H01M 4/505, C01G 53/00, H01M 10/052

(54) **ACTIVE SUBSTANCE FOR NONAQUEOUS ELECTROLYTE SECONDARY CELL, METHOD FOR PRODUCING ACTIVE SUBSTANCE, ELECTRODE FOR NONAQUEOUS ELECTROLYTE SECONDARY CELL, AND NONAQUEOUS ELECTROLYTE SECONDARY CELL**
WIRKSTOFF FÜR EINE SEKUNDÄRZELLE MIT NICHTWÄSSRIGEM ELEKTROLYT, VERFAHREN ZUR HERSTELLUNG DES WIRKSTOFFS, ELEKTRODE FÜR DIE SEKUNDÄRZELLE MIT NICHTWÄSSRIGEM ELEKTROLYT UND SEKUNDÄRZELLE MIT NICHTWÄSSRIGEM ELEKTROLYT
SUBSTANCE ACTIVE POUR PILE SECONDAIRE À ÉLECTROLYTE NON AQUEUX, PROCÉDÉ DE PRODUCTION DE LA SUBSTANCE ACTIVE, ÉLECTRODE POUR PILE SECONDAIRE À ÉLECTROLYTE NON AQUEUX ET PILE SECONDAIRE À ÉLECTROLYTE NON AQUEUX

(30) Priority: 09.11.2011 JP 2011245093; 16.12.2011 JP 2011275583
(43) Date of publication of application: 17.09.2014
(73) Proprietor: GS Yuasa International Ltd., Kisshoin, Minami-ku, Kyoto-shi, Kyoto 601-8520 (JP)
(72) Inventor: ENDO, Daisuke, Kyoto-shi Kyoto 601-8520 (JP)
(74) Representative: Isarpatent
(86) International application number: PCT/JP2012/077409
(87) International publication number: WO 2013/069454

(56) References cited:
- EP-A1- 1 447 866
- EP-A1- 2 219 251
- WO-A1-2011/021686
- JP-A- H1 072 219
- JP-A- 2001 076 724
- JP-A- 2004 193 115
- JP-A- 2008 147 068
- JP-A- 2008 258 160
- JP-A- 2009 205 974
- JP-A- 2010 086 690
- US-A1- 2009 068 561
- US-A1- 2009 194 734
- CHI-HOON SONG ET AL: "Influence of solvents on the structural and electrochemical properties of Li[Li0.2 Ni0.1 Co0.2 Mn0.5]O2 prepared by a solvothermal reaction method", JOURNAL OF THE ELECTROCHEMICAL SOCIETY, ELECTROCHEMICAL SOCIETY, vol. 153, no. 2, 4 January 2006 (2006-01-04), pages A390-A395, XP002613290, ISSN: 0013-4651, DOI: 10.1149/1.2149301
- PARK K S ET AL: "Effect of Li ion in transition metal sites on electrochemical behavior of layered lithium manganese oxides solid solutions", SOLID STATE IONICS, NORTH HOLLAND PUB. COMPANY. AMSTERDAM; NL, NL, vol. 171, no. 1-2, 30 June 2004 (2004-06-30), pages 141-146, XP004520660, ISSN: 0167-2738, DOI: 10.1016/J.SSI.2004.04.016

## Description

### TECHNICAL FIELD

The present invention relates to an active material for a nonaqueous electrolyte secondary battery, a method for manufacturing the active material, and a nonaqueous electrolyte secondary battery including the active material.

### BACKGROUND ART

For nonaqueous electrolyte secondary batteries, LiCoO₂ has been mainly used as a positive active material. However, the discharge capacity thereof is only about 120 to 130 mAh/g.

As a material of a positive active material for a nonaqueous electrolyte secondary battery, a solid solution of LiCoO₂ and other compounds is known. Li[Co₁₋₂ₓNiₓMnₓ] O₂ (0 < x ≤ 1/2), a solid solution having an α-NaFeO₂-type crystal structure and formed of three components: LiCoO₂, LiNiO₂ and LiMnO₂, was published in 2001. LiNi_{1/2}Mn_{1/2}O₂ or LiCo_{1/3}Ni_{1/3}Mn_{1/3}O₂ that is one example of the above-mentioned solid solution has a discharge capacity of 150 to 180 mAh/g, and is also excellent in charge-discharge cycle performance.

In contrast with the so-called "LiMeO₂-type" active material as described above, the so-called "lithium-excess-type" active material is known in which the composition ratio of lithium (Li) to the ratio of a transition metal (Me) (Li/Me) is greater than 1, with Li/Me being, for example, 1.25 to 1.6. This material can be denoted as Li₁+αMe_{1-α}O₂ (α > 0). Here, ß = (1 + α)/(1 - α) when the composition ratio of lithium (Li) to the ratio of a transition metal (Me) (Li/Me) is ß, and therefore, for example, α = 0.2 when Li/Me is 1.5.

Patent Document 1 describes an active material which is one type of the above-mentioned active materials and can be denoted as a solid solution of three components: Lᵢ[Li_{1/3}Mn_{2/3}]O₂, LiNi_{1/2}Mn_{1/2}O₂ and LiCoO₂. Further, as a method for manufacturing a battery using the above-mentioned active material, it is described that by providing a production step of performing charging that leads at least to a region with a relatively small potential change, which emerges in a positive electrode potential range of more than 4.3 V (vs. Li/Li⁺) and not more than 4.8 V (vs. Li/Li⁺), a battery having a discharge capacity of 177 mAh/g or more can be produced even if a charge method is employed in which the maximum upper limit potential of a positive electrode during charging is 4.3 V(vs. Li/Li⁺) or less.

In the meantime, there are inventions wherein the particle size of a lithium-containing transition metal oxide is defined and inventions wherein pre-firing is employed when an active material is produced (Patent Documents 2 to 9).

Patent Document 2 describes "A method for manufacturing a lithium-containing transition metal oxide containing nickel and manganese and having a closest packing structure of oxygen, the method including the steps of: pre-firing a raw material containing nickel and manganese at a temperature of 500°C to 700°C to obtain a precursor oxide containing nickel and manganese; and mixing the precursor oxide with a lithium source and main-firing the resulting mixture to obtain a lithium-containing transition metal oxide" (claim 17). It describes an invention wherein an atomic ratio: m_{Li}/m_{T} of a molar number m_{Li} of lithium to a molar number m_{T} of a transition metal in the mixture of the precursor oxide and the lithium source is made larger than 1.2 (claims 25 and 26). It is also described that "when the atomic ratio: M_{Li}/M_{T} is changed to 0.8 to 1.5" (paragraph [0131]), "the atomic ratio: M_{Li}/M_{T} (Li/Me) increases, leading to excess of lithium, and resultantly the charge-discharge capacity and cycle performance are improved; but applications may be limited because an active material having an atomic ratio of 1.5 has an unsharp curve at the final stage of discharge" (paragraph [0132]).

Further, Patent Document 2 describes that "The active material of the present invention may contain at least one heteroelement selected from the group consisting of cobalt, iron, zinc, aluminum, magnesium, strontium, yttrium and ytterbium; but the amount of heteroelement is preferably at a level such that the insides or surfaces of primary particles or secondary particles of the lithium-containing transition metal oxide are doped with the heteroelement" (paragraph [0042]), and "A small amount of heteroelement may be added to the active material of the present invention. By adding a heteroelement, various effects can be exhibited. For example, addition of cobalt provides an effect of improving a load characteristic" (paragraph [0165]).

Further, Patent Document 2 describes "The active material for a nonaqueous electrolyte secondary battery according to any one of claims 1 to 5, wherein the average particle size of primary particles that form the lithium-containing transition metal oxide is 1 µm or less, and at least some of the primary particles have a triangular or hexagonal plane at the surface." (claim 6), and describes that "Primary particles of the lithium-containing transition metal oxide can be clearly observed in a SEM image in which the value of the atomic ratio: M_{Li}/M_{T} is 1.1 or 1.2. It is apparent that the average particle size of primary particles is 1 µm or less, and the primary particle has a plane having a shape close to a triangle or hexagon. These primary particles are mutually fused or sintered at a part of the surface to form secondary particles." (paragraph [0130]); and "Figs. 36A and 36B each show a SEM image (magnification: 30000) of typical primary particles of the obtained active material. As is evident from Fig. 36, the particle is in the shape of a pillar, particularly in the shape of a hexagonal pillar. The size of the primary particle was around 1 µm. It is considered that since lithium hydroxide was used in an excessive amount during main firing, lithium hydroxide acted as a flux to develop crystals of the active material. Therefore, for obtaining pillar-shaped particles, it is preferred to use a lithium source in an excessive amount, so that the lithium source is made to serve as a flux to promote crystal growth." (paragraph [0163]).

Patent Document 3 describes an invention of "A spinel type lithium manganese composite oxide for a lithium ion battery, wherein the lithium manganese composite oxide is represented by the general formula: Li₁₊ₓMn_{2-y}M_{y}O₄ wherein M is at least one element selected from A1, Mg, Si, Ca, Ti, Cu, Ba, W and Pb, -0.1 ≤ x ≤ 0.2 and 0.06 ≤ y ≤ 0.3, d10 is 2 µm to 5 µm (inclusive), d50 is 6 µm to 9 µm (inclusive) and d90 is 12 µm to 15 µm (inclusive) where particle sizes at cumulative volumes of 10%, 50% and 90% in a particle size distribution are d10, d50 and d90, respectively, the BET specific surface area is more than 1.0 m²/g and not more than 2.0 m²/g, and the tap density is not less than 0.5 g/cm³ and less than 1.0 g/cm³." (claim 1), and describes that "The lithium manganese composite oxide according to the present invention satisfies all of the requirements: d10 of 2 µm to 5 µm (inclusive), d50 of 6 µm to 9 µm (inclusive) and d90 of 12 µm to 15 µm (inclusive) where particle sizes at cumulative volumes of 10%, 50% and 90% in a particle size distribution are d10, d50 and d90, respectively. The reason why d10 is set to 2 µm to 5 µm (inclusive) is that a mixing failure easily occurs at the time of preparing slurry when d10 is less than 2 µm, and unevenness easily occurs in an electrode film after application of the slurry when d10 is more than 5 µm. The reason why d50 which refers to the average particle size is set to 6 µm to 9 µm (inclusive) is that high-temperature characteristics (high-temperature cycle performance and high-temperature storage characteristics) tend to be deteriorated when d50 is less than 6 µm, and an unevenness easily occurs in an electrode film after a slurry prepared by mixing a binder and a conductive material with the composite oxide is applied to a current collector when d50 is more than 9 µm. The reason why d90 is set to 12 µm to 15 µm (inclusive) is that, like the reason for the limitation of the range of d10, a mixing failure easily occurs at the time of preparing a slurry when d90 is less than 12 µm, and an unevenness easily occurs in an electrode film when d90 is more than 15 µm. Occurrence of unevenness in the electrode film after application of the slurry is not preferable because smoothness of the electrode surface after pressing is lost." (paragraph [0028]).

Further, Patent Document 3 describes that "A lithium manganese composite oxide according to the present invention is obtained by subjecting the obtained raw material mixture to an oxidation treatment (firing in an oxidizing atmosphere, etc.) under proper conditions, and the lithium manganese composite oxide is used as a positive active material for a lithium secondary battery, It is important that the oxidation treatment is performed using a continuous furnace, and the inside of the furnace is temperature-controlled in two stages. A static furnace is disadvantageous from the industrial viewpoint because quality fluctuation of the product is significant. For temperature control in two stages, it is preferable to perform an oxidation treatment at a predetermined temperature between 350 to 700°C for a treatment time period of 3 to 9 hours in the first stage and perform an oxidation treatment at a predetermined temperature between 800 to 1000°C for a treatment time period of 1 to 5 hours in the second stage, and it is more preferable to perform an oxidation treatment at a predetermined temperature between 400 to 600°C for a treatment time period of 4 to 8 hours in the first stage and perform an oxidation treatment at a predetermined temperature between 850 to 950°C for a treatment time period of 2 to 4 hours in the second stage. The treatment in the first stage is performed for the purpose of oxidizing a carbonate as a raw material mixture to an oxide, and the treatment in the second stage is oxidation for forming the oxide obtained in the first stage into a preferred heteroelement-substituted lithium manganese oxide. It is important in exhibition of characteristics that unreacted substances are not caused to remain at each treatment temperature and other by-products are not generated. Therefore, a temperature lower than 350°C in the first stage is not preferable because oxidation of a carbonate as a raw material mixture becomes insufficient. A temperature higher than 700°C in the first stage is not preferable because the raw material mixture is partially changed into a spinel oxide, so that a by-product is generated. Further, a temperature lower than 800°C in the second stage is not preferable because conversion into a lithium manganese oxide is insufficient, while a temperature higher than 1000°C in the second stage is not preferable because an oxygen loss easily occurs." (paragraph [0040]).

Patent Documents 4 to 6 describe that a precursor of a transition metal oxide containing Co, Ni and Mn is pre-fired, and then mixed with a lithium compound, and the mixture is fired.

Patent Document 7 aims for "providing a positive active material for a nonaqueous electrolyte secondary battery, with which a secondary battery having a small internal resistance and having an excellent power performance and life performance can be obtained, and providing a method for stably producing the positive active material for a nonaqueous electrolyte secondary battery" (paragraph [0026]). Patent Document 7 describes an invention of "A positive active material for a nonaqueous electrolyte secondary battery, wherein the positive active material is a powder of a lithium metal composite oxide represented by the general formula: Li_{z}Ni_{1-w}M_{w}O₂ wherein M is at least one metal element selected from the group consisting of Co, Al, Mg, Mn, Ti, Fe, Cu, Zn and Ga and the requirements of 0 ≤ w ≤ 0.25 and 1.0 ≤ z ≤ 1.1 are satisfied, the positive active material includes primary particles of the powder of the lithium metal composite oxide and secondary particles formed by agglomeration of the plurality of primary particles, the secondary particle is in the shape of a sphere or an oval sphere, 95% or more of the secondary particles have a particle size of 20 µm or less, the average particle size of the secondary particles is 7 to 13 µm, and the tap density of the powder is 2.2 g/cm³ or more •••." (claim 1). The document describes a method for manufacturing the positive active material, "wherein the temperature is elevated from room temperature to 450 to 550°C at a temperature elevation rate of 0.5 to 15°C/min, this attained temperature is kept for 1 to 10 hours to perform firing in the first stage, the temperature is then further elevated to 650 to 800°C at a temperature elevation rate of 1 to 5°C/min, this attained temperature is kept for 0.6 to 30 hours to perform firing in the second stage" (claim 6). It is also described that the particle size of primary particles is 1 µm or less.

Patent Document 8 aims for providing "a lithium nickel manganese cobalt composite oxide for a lithium secondary battery positive active material which is capable of imparting excellent cycle performance and an excellent load characteristic" (paragraph [0009]). Patent Document 8 describes inventions of "A lithium nickel manganese cobalt composite oxide for a lithium secondary battery positive active material, wherein the lithium nickel manganese cobalt composite oxide is represented by the following general formula (1): LiₓNi_{1-y-z}MnyCo_{z}O₂ (1) wherein x is 0.9 ≤ x ≤ 1.3, y is 0 < y < 1.0 and z is 0 < z < 1.0 where y + z < 1, and has an average particle size of 5 to 40 µm, a BET specific surface area of 5 to 25 m²/g and a tap density of 1.70 g/ml or more." (claim 1) and "A method for manufacturing a lithium nickel manganese cobalt composite oxide for a lithium secondary battery positive active material, wherein a lithium compound is mixed with a composite carbonate containing nickel atoms, manganese atoms and cobalt atoms at a molar ratio of 1 : 0.5 to 2.0 : 0.5 to 2.0 and having an average particle size of 5 to 40 µm, a BET specific surface area of 40 m²/g or more and a tap density of 1.7 g/ml or more, thereby obtaining a firing raw material mixture, and the firing raw material mixture is fired at 650 to 850°C ••• to obtain a lithium nickel manganese cobalt composite oxide." (claim 4). The document also describes that "In the production method of the present invention, firing may be performed as many times as preferred. Alternatively, the mixture may be fired once, ground and then fired again in order to have uniform powder characteristics." (paragraph [0039]).

Patent Document 9 describes inventions of "A positive active material for a nonaqueous electrolyte solution secondary battery, wherein the positive active material includes composite oxide particles containing Li and at least one transition element selected from the group consisting of Co, Ni, Mn and Fe, and the composite oxide particles include 90% or more of spherical and/or oval-spherical particles in which D1/D2 is in a range of 1.0 to 2.0 where D1 is the longest diameter and D2 is the shortest diameter." (claim 1), "The positive active material according to any one of claims 1 to 3, wherein the composite oxide particles mainly include particles having a particle size of 2 to 100 pm and has an average particle size of 5 to 80 µm." (claim 4) and "A method for manufacturing the positive active material for a nonaqueous electrolyte solution secondary battery according to claim 1, wherein raw materials including compound particles of at least one transition element selected from the group consisting of Co, Ni, Mn and Fe and a lithium compound are mixed, and the resulting mixture is held at a temperature equal to or higher than the melting point of the lithium compound as a pre-firing step and then held at a temperature equal to or higher than the decomposition temperature of the lithium compound as a main-firing step." (claim 6) for the purpose of providing "a positive active material for a nonaqueous electrolyte solution secondary battery with high packing efficiency and a large packing density, the load characteristic of which is effectively improved and the capacity of which can be increased" (paragraph [0004]).

### PRIOR ART DOCUMENTS

### PATENT DOCUMENTS

Patent Document 1 : JP-A-2010-086690
Patent Document 2 : JP-A-2008-258160
Patent Document 3 : Japanese Patent No. 4221448
Patent Document 4 : JP-A-2008-251191
Patent Document 5 : JP-A-2010-192424
Patent Document 6 : JP-A-2011-116580
Patent Document 7 : JP-A-2007-257985
Patent Document 8 : JP-A-2009-205893
Patent Document 9 : JP-A-2003-17050

### SUMMARY OF THE INVENTION

### PROBLEMS TO BE SOLVED BY THE INVENTION

The so-called "lithium-excess-type" positive active material as described in JP-A-2010-086690 has such a characteristic that a high discharge capacity is achieved because at least first charge is performed at a relatively high potential of more than 4.3 V, particularly at a potential of 4.4 V or more. However, initial efficiency in this case is not sufficiently high, and there is the problem of poor high rate discharge performance.

Patent Documents 2 to 9 describe that the particle size of a lithium-containing transition metal oxide to be used as an active material is defined, and pre-firing is employed when an active material is produced. However, these documents do not disclose improvement of high rate discharge performance and improvement of initial efficiency by the above-mentioned techniques, and do not show that these techniques are applied to an active material containing a lithium-containing transition metal oxide in which a molar ratio of Li to a transition metal element Me containing Co, Ni and Mn (Li/Me) is 1.2 to 1.4.

An object of the present invention is to provide an active material for a nonaqueous electrolyte secondary battery, which has a high discharge capacity and excellent high rate discharge performance, a method for manufacturing the active material, and a nonaqueous electrolyte secondary battery including the active material.

### MEANS FOR SOLVING THE PROBLEMS

The constitution and the effect of the present invention will be described along with technical concepts. However, the action mechanism includes assumptions, and propriety thereof does not limit the present invention. The present invention may be carried out in various other modes without departing from the invention as defined in the claims.

### ADVANTAGES OF THE INVENTION

According to the present invention, there can be provided an active material for a nonaqueous electrolyte secondary battery, which has a high discharge capacity and excellent high rate discharge performance.

According to some embodiments of the present invention, there can be provided an active material for a nonaqueous electrolyte secondary battery, which has excellent initial efficiency in addition to the above-described effects.

### BRIEF DESCRIPTION OF THE DRAWINGS

Fig. 1 shows an example (Example 1) of the particle size distribution of a lithium transition metal composite oxide used as an active material for a nonaqueous electrolyte secondary battery;
Fig. 2 shows an example (Example 2) of the particle size distribution of a lithium transition metal composite oxide used as an active material for a nonaqueous electrolyte secondary battery;
Fig. 3 shows an electron microscope photograph of a pre-fired lithium transition metal composite oxide in the representative example (Example 2-4);
Fig. 4 shows an electron microscope photograph of a lithium transition metal composite oxide, which is not pre-fired, in the representative comparative example (Comparative Example 2-1); and
Fig. 5 shows an electron microscope photograph of a pre-fired lithium transition metal composite oxide with Li/Me = 1.5 (Comparative Example 2-8).

### MODE FOR CARRYING OUT THE INVENTION

For achieving a high discharge capacity and excellent initial efficiency, the composition of a lithium transition metal composite oxide contained in an active material for a nonaqueous electrolyte secondary battery according to the present invention includes a transition metal element containing Co, Ni and Mn and Li, and the molar ratio of Li to the transition metal element Me (Li/Me) is 1.2 to 1.4.

When the molar ratio of Li to the transition metal element Me (Li/Me), which is represented by (1 + α)/(1 - α), in the compositional formula: Li₁+αMe₁₋αO₂ is more than 1.4, improvement of the discharge capacity and initial efficiency of the active material for a nonaqueous electrolyte secondary battery is not sufficient and high rate discharge performance is deteriorated even when a mixed powder of a precursor of a transition metal carbonate and a lithium compound is pre-fired, followed by firing the mixed powder to produce a lithium transition metal composite oxide. When the molar ratio (Li/Me) is less than 1.2, the discharge capacity decreases and high rate discharge performance is deteriorated. Therefore, the molar ratio (Li/Me) is set to 1.2 to 1.4.

The molar ratio of Co to the transition metal element Me (Co/Me) is preferably 0.02 to 0.23, more preferably 0.04 to 0.21, most preferably 0.06 to 0.17 in that a nonaqueous electrolyte secondary battery having a high discharge capacity and excellent initial efficiency can be obtained.

The molar ratio of Mn to the transition metal element Me (Mn/Me) is preferably 0.63 to 0.72, more preferably 0.65 to 0.71 in that a nonaqueous electrolyte secondary battery having a high discharge capacity and excellent initial efficiency can be obtained.

The lithium transition metal composite oxide according to the present invention is basically a composite oxide containing Li, Co, Ni and Mn as metal elements, but inclusion of a small amount of other metals such as alkali metals and alkali earth metals such as Na and Ca and transition metals typified by 3d transition metals such as Fe and Zn is not excluded within the bounds of not impairing the effect of the present invention.

The lithium transition metal composite oxide according to the present invention has an α-NaFeO₂ structure. The lithium transition metal composite oxide is attributable to P3₁12 or R3-m as a space group. Here, P3₁12 is a crystal structure model in which atom positions at 3a, 3b and 6c sites in R3-m are subdivided, and the P3₁12 model is employed when there is orderliness in atom arrangement in R3-m. Properly, "R3-m" should be written with a bar "-" added above "3" of "R3m".

The lithium transition metal composite oxide according to the present invention is one formed by mixing a precursor of a pre-fired transition metal oxide with a lithium compound and firing the mixture. The present inventor has found that when a lithium transition metal composite oxide obtained by pre-firing a precursor of a transition metal oxide at 300 to 500°C, then mixing the precursor with a lithium compound, and firing the mixture is used as an active material, the discharge capacity of a nonaqueous electrolyte battery is increased and high rate discharge performance is remarkably improved as compared to a case where pre-firing is not performed, leading to attainment of the present invention.

The lithium transition metal composite oxide according to the present invention is one produced by pre-firing at 250 to 750°C a mixed powder obtained by mixing a precursor of a transition metal carbonate with a lithium compound so that the molar ratio of Li to the transition metal element Me (Li/Me) in the lithium transition metal composite oxide is 1.2 to 1.4, then re-mixing the mixed powder and firing the mixture. The present inventor has found that when the mixed powder is pre-fired and once re-mixed to perform degassing as described above before main firing in which the temperature is elevated to about 900°C, various kinds of characteristics (particularly high rate discharge performance and initial efficiency) of a nonaqueous electrolyte secondary battery including an active material containing a fired lithium transition metal composite oxide are improved as compared to a case where pre-firing is not performed, leading to attainment of the present invention.

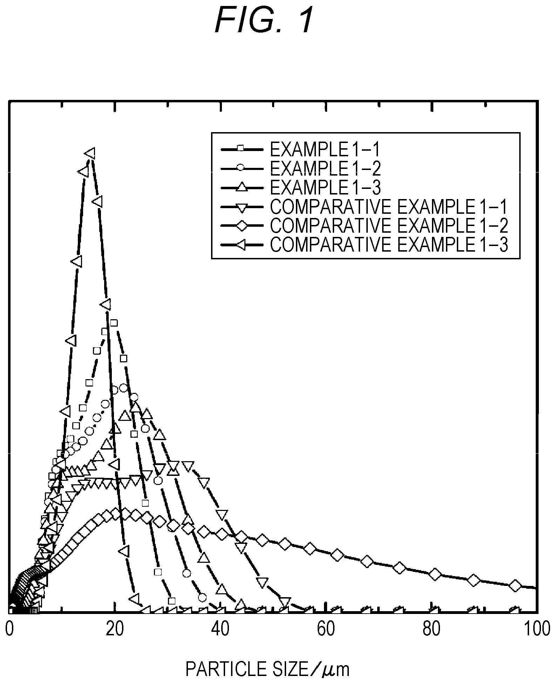

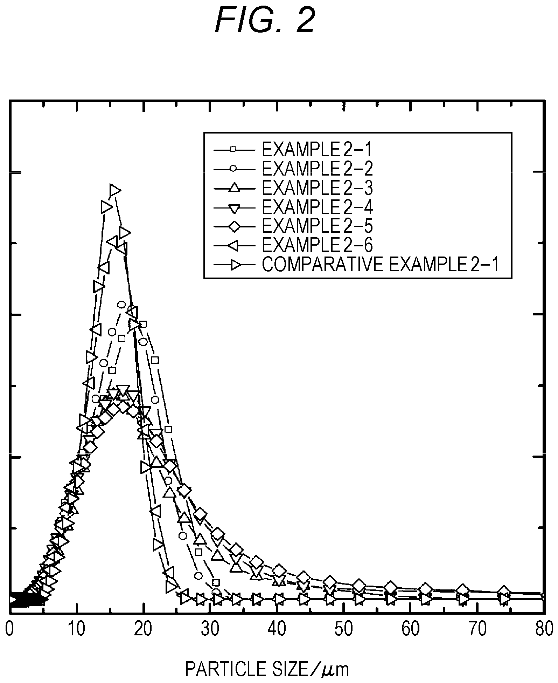

When the particle size distribution of secondary particles was measured for a finally produced lithium transition metal composite oxide obtained by performing pre-firing as described above, D10 was 6 to 9 µm, D50 was 13 to 16 µm and D90 was 18 to 32 µm where particle sizes at cumulative volumes of 10%, 50% and 90% in a particle size distribution of secondary particles are D10, D50 and D90, respectively. Figs. 1 and 2 each show an example of the particle size distribution of a lithium transition metal composite oxide when the temperature of pre-firing is changed. Fig. 1 shows an example in which pre-firing is performed as in the former case (Example 1), and Fig. 2 shows an example in which pre-firing is performed as in the latter case (Example 2).

In a lithium transition metal composite oxide obtained by pre-firing a precursor of a transition metal oxide at 300 to 500°C, then mixing the precursor with a lithium compound so as to achieve a Li/Me of 1.2 to 1.4, and firing the mixture in Example 1, D10 is 6 to 9 µm, D50 is 13 to 16 µm and D90 is 18 to 32 µm, the ratio of D90 to D10 (D90/D10) is 2.9 (2.3 or more) to 4.4, and the particle size of a primary particle is 1 µm or less. In a lithium transition metal composite oxide which is not pre-fired, the D90/D10 is less than 2.9 (2.1 or less) and the particle size of a primary particle is more than 1 µm. When the temperature of pre-firing is higher than 500°C, the D90/D10 is more than 4.4. When the Li/Me is more than 1.4, D50 may be more than 16 µm when pre-firing is performed at 300°C or higher, and the particle size of a primary particle is more than 1 µm.

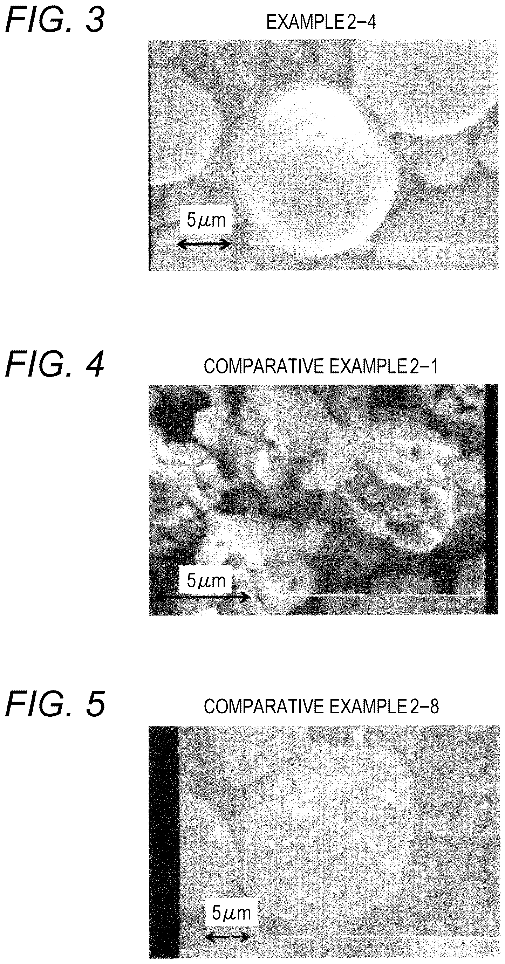

The particle size distribution of secondary particles of a lithium transition metal composite oxide in Example 2 tends to be slightly broader when pre-firing is performed than when pre-firing is not performed, but the pre-firing temperature does not have a significant effect. Also, there is no significant difference between a case where pre-firing is performed and a case where pre-firing is not performed, with D10 falling within a range of 7 to 9 µm, D50 falling within a range of 13 to 16 µm and D90 falling within a range of 18 to 32 µm. However, as shown in Examples described later, there is a significant difference in particle size of a primary particle in that when a lithium transition metal composite oxide selectively taken out from the bottom of a sagger is observed with a scanning electron microscope (SEM) photograph, the particle size is 1 µm or less in the case where pre-firing is performed, while the particle size is more than 1 µm in the case where pre-firing is not performed. Fig. 3 shows an electron microscope photograph (photograph taken with a SEM at a magnification of 2000) of a pre-fired lithium transition metal composite oxide in the representative example (Example 2-4), and Fig. 4 shows an electron microscope photograph (photograph taken with a SEM at a magnification of 3500) of a lithium transition metal composite oxide, which is not pre-fired, in the representative comparative example (Comparative Example 2-1). Secondary particles in Example 2-4 are truly spherical and cannot be seen to be agglomerates of primary particles as shown in Fig. 3, but secondary particles in Comparative Example 2-1 are out of spherical shape and can be seen to be agglomerates of primary particles with the size of more than 1 µm for the most part as shown in Fig. 4. A lithium transition metal composite oxide having a molar ratio (Li/Me) of 1.5, i.e. more than 1.4 (Comparative Example 2-8) includes primary particles having a size of more than 1 µm as shown in the electron microscope photograph (photograph taken with a SEM at a magnification of 2000) in Fig. 5 even when pre-firing is performed. The D90/D10 is 2.3 to 4.1 when pre-firing is performed.

As described above, in the present invention, a lithium transition metal composite oxide, in which the molar ratio of Li to the transition metal element Me (Li/Me) is 1.2 to 1.4, D10 is 6 to 9 µm, D50 is 13 to 16 µm and D90 is 18 to 32 µm where particle sizes at cumulative volumes of 10%, 50% and 90% in a particle size distribution of secondary particles are D10, D50 and D90, respectively, and the particle size of a primary particle is 1 µm or less, is obtained by pre-firing a precursor of a transition metal oxide at 300 to 500°C, then mixing the precursor with a lithium compound so as to achieve a Li/Me of 1.2 to 1.4, and firing the mixture at 800 to 1000°C, or by pre-firing at 250 to 750°C a mixed powder obtained by mixing a coprecipitation precursor of a transition metal carbonate with a lithium compound so that the molar ratio of Li to the transition metal element Me (Li/Me) in the lithium transition metal composite oxide is 1.2 to 1.4, then re-mixing the mixed powder and firing the mixture at 800 to 1000°C.

An active material for a nonaqueous electrolyte secondary battery which contains the lithium transition metal composite oxide has an increased discharge capacity and remarkably improved high rate discharge performance, and has, in addition thereto, remarkably improved initial efficiency in the latter case.

However, even when a mixed powder is pre-fired, and then re-mixed and the mixture is fired as described above, an active material for a nonaqueous electrolyte secondary battery which has a high discharge capacity, excellent high rate discharge performance and excellent initial efficiency is not obtained in the case where the lithium transition metal composite oxide is ground, so that D10, D50 and D90 become smaller than the above-described range, as shown in comparative examples described later.

When pre-firing is performed, the BET specific surface area of the lithium transition metal composite oxide is increased as compared to a case where pre-firing is not performed, and the BET specific surface area is in a range of 3.5 to 6.5 m²/g. The BET specific surface area decreases as the molar ratio Li/Me increases, and in the case where the molar ratio Li/Me is 1.5, the BET specific surface area is less than 3.5 m²/g even when pre-firing is performed, as shown in comparative examples described later.

When pre-firing is performed, the tap density of the lithium transition metal composite oxide is slightly increased as compared to a case where pre-firing is not performed, and the tap density is in a range of 1.65 to 1.96 g/cm³.

In the case of Example 1, when the precursor of a transition metal oxide is pre-fired at 300°C or higher, spherical particles of the lithium transition metal composite oxide are out of shape, and the tap density is decreased to 1.88 g/cm³ or less. When the temperature of pre-firing is higher than 500°C, the tap density becomes less than 1.65 g/cm³. Therefore, the tap density is preferably 1.65 to 1.88 g/cm³.

Next, a method for manufacturing an active material for a nonaqueous electrolyte secondary battery according to the present invention will be described.

The active material for a nonaqueous electrolyte secondary battery according to the present invention can be obtained basically by preparing a raw material so as to contain metal elements (Li, Mn, Co and Ni) which form the active material in accordance with the composition of a preferred active material (lithium transition metal composite oxide), and finally firing the prepared raw material. For the amount of the Li raw material, however, it is preferable to incorporate the Li raw material in an excessive amount by about 1 to 5% in consideration of elimination of a part thereof during firing.

As a method for preparing a lithium transition metal composite oxide having a preferred composition, the so-called "solid phase method" in which salts of Li, Co, Ni and Mn are mixed and fired, and a "coprecipitation method" in which a coprecipitation precursor with Co, Ni and Mn made to exist in one particle is prepared beforehand, and a Li salt is mixed thereto, and the mixture is fired are known. In the synthesis process of the "solid phase method", particularly Mn is hard to be uniformly dissolved with Co and Ni. Therefore, it is difficult to obtain a sample in which the elements are uniformly distributed in one particle. When the active material for a nonaqueous electrolyte secondary battery according to the present invention is prepared, there is no limitation on whether the "solid phase method" or the "coprecipitation method" is selected. When the "solid phase method" is selected, however, it is very difficult to produce a positive active material according to the present invention. Selection of the "coprecipitation method" is more preferable because it is easy to obtain an active material having a more uniform element distribution.

When a coprecipitation precursor is prepared, Mn is most easily oxidized among Co, Ni and Mn, so that it is not easy to prepare a coprecipitation precursor in which Co, Ni and Mn are uniformly distributed in a divalent state, and therefore uniform mixing of Co, Ni and Mn at an atomic level tends to be insufficient. Particularly in the composition range in Examples described later, the ratio of Mn is high as compared to the ratios of Co and Ni, and therefore it is important to remove dissolved oxygen in an aqueous solution. Examples of the method for removing dissolved oxygen include a method in which a gas containing no oxygen is bubbled. The gas containing no oxygen is not limited, but a nitrogen gas, an argon gas, carbon dioxide (CO₂) or the like can be used. Particularly, when a coprecipitation precursor of a transition metal carbonate (hereinafter, referred to as a "coprecipitation carbonate precursor") is prepared as in Examples, employment of carbon dioxide as a gas containing no oxygen is preferable because an environment is provided in which the carbonate is more easily generated.

The pH in the step of producing a precursor by coprecipitating in a solution a compound containing Co, Ni and Mn is not limited, and the pH can be set at 7.5 to 11 when the coprecipitation precursor is prepared as a coprecipitation carbonate precursor. It is preferable to control the pH for increasing the tap density. By setting the pH at 9.4 or less, it can be ensured that the tap density is 1.65 g/cm³ or more, so that high rate discharge performance can be improved. Further, by setting the pH at 8.0 or less, the particle growth rate can be increased, so that the stirring duration after completion of dropwise addition of a raw material aqueous solution can be reduced.

The coprecipitation precursor is preferably a compound with Mn, Ni and Co mixed uniformly. In the present invention, the coprecipitation precursor is preferably a carbonate for obtaining an active material for a nonaqueous electrolyte secondary battery, which has a high discharge capacity and excellent initial efficiency. A precursor having a higher bulk density can be prepared by using a crystallization reaction using a complexing agent, etc. At this time, when the precursor is mixed with a Li source and the mixture is fired, an active material having a higher density can be obtained, and therefore the energy density per electrode area can be increased.

Examples of the raw material of the coprecipitation precursor may include manganese oxide, manganese carbonate, manganese sulfate, manganese nitrate and manganese acetate for the Mn compound, nickel hydroxide, nickel carbonate, nickel sulfate, nickel nitrate and nickel acetate for the Ni compound, and cobalt sulfate, cobalt nitrate and cobalt acetate for the Co compound.

A raw material to be used for preparation of the coprecipitation precursor may be in any form as long as it forms a precipitation reaction with an aqueous alkali solution, but use of a metal salt having a high solubility is preferable.

In Example 1, a compound of the transition metal element Me containing Co, Ni and Mn is coprecipitated in a solution to produce a coprecipitation precursor of a transition metal oxide, and the coprecipitation precursor is then pre-fired at 300 to 500°C. By performing pre-firing at 300 to 500°C, the discharge capacity is increased and high rate discharge performance is significantly improved as compared to a case where pre-firing is not performed. When the temperature of pre-firing is lower than 300°C or higher than 500°C, the discharge capacity (0.1C capacity) is not affected, but high rate discharge performance is gradually deteriorated.

The active material for a nonaqueous electrolyte secondary battery in Example 1 is prepared by mixing the pre-fired coprecipitation precursor with a Li compound, and then firing the mixture. The active material for a nonaqueous electrolyte secondary battery can be suitably produced by using lithium hydroxide, lithium carbonate, lithium nitrate, lithium acetate or the like as the Li compound.

In Example 2, a compound of the transition metal element Me containing Co, Ni and Mn is coprecipitated in a solution to produce a coprecipitation precursor of a transition metal carbonate, the coprecipitation precursor is then mixed with a lithium compound to form a mixed powder, and the mixed powder is pre-fired. As the lithium compound, lithium hydroxide, lithium carbonate, lithium nitrate, lithium acetate or the like can be used, but lithium carbonate is preferable. The temperature of pre-firing is 250 to 750°C.

When pre-firing is performed, the transition metal carbonate is changed into a transition metal oxide, and the transition metal oxide reacts with a lithium compound to generate a precursor of a lithium transition metal composite oxide. Since a carbon dioxide gas is generated in this pre-firing step, the product is taken out after being cooled, and re-mixed to perform degassing. At this time, it is preferable to mildly grind the product so that aggregation of secondary particles is released and the particle size is equalized. In Example 2, main firing is performed after pre-firing.

The firing temperature affects the reversible capacity of the active material.

When the firing temperature is excessively high, the obtained active material is collapsed with an oxygen release reaction, and a phase of monoclinic crystals defined by the Li[Li_{1/3}Mn_{2/3]}O₂ type, in addition to hexagonal crystals as the main phase, tends to be observed as a split phase rather than a solid solution phase. Inclusion of such a split phase in an excessive amount is not preferable because the reversible capacity of the active material is reduced. In this material, an impurity peak is observed at around 35° and 45° on an X-ray diffraction pattern. Therefore, the firing temperature is preferably lower than a temperature at which the oxygen release reaction of the active material has some influence. The oxygen release temperature of the active material is generally 1000°C or higher in the composition range according to the present invention, but since the oxygen release temperature slightly varies depending on the composition of the active material, it is preferable to confirm the oxygen release temperature of the active material beforehand. Since it has been confirmed that the oxygen release temperature of the active material is shifted toward a lower temperature side as the amount of Co contained in a sample increases, caution is required particularly when the amount of Co is high. As a method for confirming the oxygen release temperature of the active material, a mixture of a coprecipitation precursor and a lithium compound may be subjected to thermogravimetric analysis (DTA-TG measurement) for simulating a firing reaction process, but in this method, platinum used for a sample chamber of a measuring apparatus may be corroded with a volatilized Li component to damage the apparatus. Therefore, a composition crystallized to some extent by employing a firing temperature of about 500°C beforehand should be subjected to thermogravimetric analysis.

On the other hand, when the firing temperature is excessively low, electrode performance tends to be low because crystallization does not sufficiently proceed. In the present invention, it is preferable that the firing temperature is 700°C or higher when a coprecipitation hydroxide is used as the precursor. It is preferable that the firing temperature is 800°C or higher when a coprecipitation carbonate is used as the precursor. Particularly, when the precursor is a coprecipitation carbonate, the optimum firing temperature tends to become lower as the amount of Co contained in the precursor increases. By sufficiently crystallizing crystallites that form primary particles as described above, the resistance at a crystal grain boundary can be reduced to promote smooth transportation of lithium ions.

By minutely analyzing a half-width of a diffraction peak of the active material of the present invention, the present inventor has confirmed that when the precursor is a coprecipitation hydroxide, strain remains in a grid in a sample synthesized at a firing temperature lower than 650°C, and strain can be remarkably eliminated by synthesis at a temperature of 650°C or higher. The present inventor has also confirmed that when the precursor is a coprecipitation carbonate, strain remains in a grid in a sample synthesized at a firing temperature lower than 750°C, and strain can be remarkably eliminated by synthesis at a temperature of 750°C or higher. Further, the size of the crystallite was increased in proportion to an increase in the synthesis temperature. Accordingly, a good discharge capacity was obtained by seeking particles having little grid strain in the system and having a sufficiently grown crystallite size in the composition of the active material of the present invention. Specifically, it has been found that employment of a synthesis temperature (firing temperature) and a Li/Me ratio composition, at which the strain amount affecting a grid constant is 2% or less and the crystallite size is grown to 50 nm or more, is preferable. When the active material is formed into an electrode and charge-discharge is performed, a change by expansion and shrinkage is observed, but it is preferable in terms of an effect obtained that the crystallite size is kept to be 30 nm or more even in the charge-discharge process.

As described above, the firing temperature is related to the oxygen release temperature of the active material, but a crystallization phenomenon occurs at 900°C or higher due to growth of primary particles to a large size even when a firing temperature at which oxygen is released from the active material is not reached. This can be confirmed by observing the active material after firing with a scanning electron microscope (SEM). An active material synthesized through a synthesis temperature higher than 900°C has primary particles grown to 0.5 µm or more, leading to a state disadvantageous to movement of Li⁺ in the active material during the charge-discharge reaction, so that charge-discharge cycle performance and high rate discharge performance are deteriorated. The size of the primary particle is preferably less than 0.5 µm, more preferably 0.3 µm or less.

Therefore, in the present invention, the firing temperature is 800 to 1000°C, more preferably around 800 to 900°C for improving the discharge capacity, charge-discharge cycle performance and high rate discharge performance when the composition ratio Li/Me is 1.2 to 1.4.

The nonaqueous electrolyte to be used for the nonaqueous electrolyte secondary battery according to the present invention is not limited, and those that are generally proposed to be used for lithium batteries and the like can be used. Examples of the nonaqueous solvent to be used for the nonaqueous electrolyte may include, but are not limited to, the following compounds alone or mixtures of two or more thereof cyclic carbonates such as propylene carbonate, ethylene carbonate, butylene carbonate, chloroethylene carbonate and vinylene carbonate; cyclic esters such as γ-butyrolactone and γ-valerolactone; chain carbonates such as dimethyl carbonate, diethyl carbonate and ethyl methyl carbonate; chain esters such as methyl formate, methyl acetate and methyl butyrate; tetrahydrofuran or derivatives thereof; ethers such as 1,3-dioxane, 1,4-dioxane, 1,2-dimethoxyethane, 1,4-dibutoxyethane and methyl diglyme; nitriles such as acetonitrile and benzonitrile; dioxolane or derivatives thereof and ethylene sulfide, sulfolane, sultone or derivatives thereof.

Examples of the electrolyte salt to be used for the nonaqueous electrolyte include inorganic ion salts including one of lithium (Li), sodium (Na) and potassium (K), such as LiClO₄, LiBF₄, LiAsF₆, LiPF₆, LiSCN, LiBr, LiI, Li₂SO₄, Li₂B₁₀Cl₁₀, NaClO₄ NaI, NaSCN, NaBr, KClO₄ and KSCN; and organic ion salts such as LiCF₃SO₃, LiN(CF₃SO₂)₂, LiN(C₂F₅SO₂)₂, LiN(CF₃SO₂)(C₄F₉SO₂), L₁C(CF₃SO₂)₃, L₁C(C₂F₅SO₂)₃, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearylsulfonate, lithium octylsulfonate and lithium dodecylbenzenesulfonate, and these ionic compounds can be used alone or as a mixture of two or more thereof.

Further, use of a mixture of LiPF₆ or LiBF₄ and a lithium salt having a perfluoroalkyl group, such as LiN(C₂F₅SO₂)₂, is more preferable because the viscosity of the electrolyte can be further reduced, so that low temperature performance can be further enhanced, and self discharge can be suppressed.

An ordinary temperature molten salt or an ionic liquid may be used as the nonaqueous electrolyte.

The concentration of the electrolyte salt in the nonaqueous electrolyte is preferably 0.1 mol/l to 5 mol/l, further preferably 0.5 mol/l to 2.5 mol/l for reliably obtaining a nonaqueous electrolyte battery having high battery performance.

The negative electrode material is not limited, and any material capable of depositing or storing lithium ions may be selected. Examples include titanium-based materials such as lithium titanate having a spinel type crystal structure typified by Li[Li_{1/3}Ti_{5/3]}O₄, alloy-based material lithium metals such as Si-, Sb- and Sn-based materials, lithium alloys (lithium metal-containing alloys such as lithium-silicon, lithium-aluminum, lithium-lead, lithium-tin, lithium-aluminum-tin, lithium-gallium and wood's alloys), lithium composite oxides (lithium-titanium), and silicon oxide as well as alloys capable of storing/releasing lithium and carbon materials (e.g. graphite, hard carbon, low-temperature baked carbon, amorphous carbon etc.).

The powder of the positive active material and the powder of the negative electrode material are preferred to have an average particle size of 100 µm or less. Particularly, the powder of the positive active material is preferred to have an average particle size of 10 µm or less for improving high power characteristics of the nonaqueous electrolyte battery. For obtaining a powder in a predetermined shape, a grinder or a classifier is used. For example, a mortar, a ball mill, a sand mill, a vibratory ball mill, a planetary ball mill, a jet mill, a counter jet mill, a swirling airflow jet mill, a sieve or the like is used. Wet grinding in which water or an organic solvent such as hexane is made to coexist may also be used during grinding. The classification method is not particularly limited, and a sieve, an air classifier or the like is used as necessary in either a dry process or a wet process.

The positive active material and the negative electrode material, which are main components of the positive electrode and the negative electrode, have been described in detail above. The positive electrode and the negative electrode may contain, in addition to the main components, a conducting agent, a binder, a thickener, a filler and the like as other components.

The conducting agent is not limited as long as it is an electron-conductive material which does not have a negative influence on battery performance, and usually conductive materials such as natural graphite (scaly graphite, flake graphite, amorphous graphite etc.), artificial graphite, carbon black, acetylene black, ketjen black, carbon whiskers, carbon fibers, metal (copper, nickel, aluminum, silver, gold etc.) powders, metal fibers, and conductive ceramic materials can be included alone or as a mixture thereof.

Among them, acetylene black is preferable as the conducting agent from the viewpoint of electron conductivity and coatability. The added amount of the conducting agent is preferably 0.1% by weight to 50% by weight, particularly preferably 0.5% by weight to 30% by weight based on the total weight of the positive electrode or the negative electrode. Use of acetylene black ground to ultrafine particles of 0.1 to 0.5 µm is preferable because the required amount of carbon can be reduced. The method for mixing thereof is based on physical mixing, and uniform mixing is preferred. Therefore, mixing can be performed in a dry process or a wet process with a powder mixer such as a V-type mixer, an S-type mixer, a grinding machine, a ball mill or a planetary ball mill.

As the binder, usually thermoplastic resins such as polytetrafluoroethylene (PTFE), polyvinylidene fluoride (PVDF), polyethylene and polypropylene, and polymers having rubber elasticity, such as an ethylene-propylene-diene terpolymer (EPDM), sulfonated EPDM, styrene butadiene rubber (SBR) and fluororubber can be used alone or as a mixture of two or more thereof. The added amount of the binder is preferably 1 to 50% by weight, particularly preferably 2 to 30% by weight based on the total weight of the positive electrode or the negative electrode.

The filler may be any material as long as it does not have a negative influence on battery performance. Usually an olefin-based polymer such as polypropylene or polyethylene, amorphous silica, alumina, zeolite, glass, carbon or the like is used. The added amount of the filler is preferably 30% by weight or less based on the total weight of the positive electrode or the negative electrode.

The positive electrode and the negative electrode are suitably prepared by kneading the main components (the positive active material in the positive electrode and the negative electrode material in the negative electrode) and other materials to form a composite, mixing the composite with an organic solvent such as N-methylpyrrolidone or toluene or water, and applying or press-bonding the resulting mixed liquid onto a current collector described in detail later, and subjecting to a heating treatment at a temperature of about 50°C to 250°C for about 2 hours. For the application method, it is preferable to apply the liquid in an arbitrary thickness and an arbitrary shape using means such as, for example, roller coating with an applicator roll or the like, screen coating, a doctor blade process, spin coating or a bar coater, but the application method is not limited thereto.

As a separator, it is preferable that a porous membrane and a nonwoven fabric exhibiting excellent high rate discharge performance are used alone or in combination. Examples of the material that forms the separator for a nonaqueous electrolyte battery may include polyolefin-based resins typified by polyethylene, polypropylene and the like, polyester-based resins typified by polyethylene terephthalate, polybutylene terephthalate and the like, polyvinylidene fluoride, vinylidene fluoride-hexafluoropropylene copolymers, vinylidene fluoride-perfluorovinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers and vinylidene fluoride-ethylene-tetrafluoroethylene copolymers.

The porosity of the separator is preferably 98% by volume or less from the viewpoint of strength. The porosity is preferably 20% by volume or more from the viewpoint of charge-discharge characteristics.

For the separator, a polymer gel including a polymer such as acrylonitrile, ethylene oxide, propylene oxide, methyl methacrylate, vinyl acetate, vinylpyrrolidone or polyvinylidene fluoride and an electrolyte may be used. Use of the nonaqueous electrolyte in a gel state as described above is preferable because an effect of preventing liquid leakage is provided.

It is preferable to use as a separator the above-mentioned porous membrane, nonwoven fabric or the like in combination with a polymer gel because liquid retainability of the electrolyte is improved. That is, a film with the surface and the microporous wall face of a polyethylene microporous membrane coated with a solvophilic polymer having a thickness of several micrometers or less is formed, and an electrolyte is held in micropores of the film, so that the solvophilic polymer gelates.

Examples of the solvophilic polymer include, in addition to polyvinylidene fluoride, polymers in which an acrylate monomer having an ethylene oxide group, an ester group etc., an epoxy monomer, a monomer having an isocyanato group, and the like are crosslinked. The monomer can be made to undergo a crosslinking reaction using heating or ultraviolet rays (UV) in combination with a radical initiator or using active beams such as electron beams (EB).

The configuration of the nonaqueous electrolyte secondary battery is not particularly limited, and examples include cylindrical batteries having a positive electrode, a negative electrode and a roll-shaped separator, prismatic batteries and flat batteries.

Both conventional positive active materials and the active material of the present invention can be charged/discharged at a positive electrode potential of around 4.5 V (vs. Li/Li⁺). However, depending on the type of nonaqueous electrolyte to be used, the nonaqueous electrolyte may be oxidized and decomposed to cause deterioration of battery performance when the positive electrode potential during charging is excessively high. Therefore, a nonaqueous electrolyte secondary battery may be required which has a sufficient discharge capacity even when such a charge method that the maximum upper limit potential of a positive electrode during charging is 4.3 V (vs. Li/Li⁺) or less is employed at the time of use of the battery. When the active material of the present invention is used, a discharge capacity higher than the capacity of the conventional positive active material, i.e. about 200 mAh/g or more, can be achieved even when such a charge method that the maximum upper limit potential of a positive electrode during charging is less than 4.5 V (vs. Li/Li⁺), for example 4.4 V (vs. Li/Li⁺) or less or 4.3 V (vs. Li/Li⁺) or less, is employed at the time of use of the battery.

For ensuring that the positive active material according to the present invention has a high discharge capacity, it is preferable that a ratio at which transition metal elements that form a lithium transition metal composite oxide exist at portions other than transition metal sites of layered rock salt-type crystal structure is low. This can be achieved by sufficiently uniform distribution of transition metal elements such as Co, Ni and Mn in a precursor to be subjected to a firing step and selection of appropriate conditions for the firing step for promoting crystallization of an active material sample. When the distribution of transition metals in the precursor to be subjected to the firing step is not uniform, a sufficient discharge capacity is not obtained. The reason for this is not exactly known, but the present inventor considers that when the distribution of transition metals in the precursor to be subjected to the firing step is not uniform, the obtained lithium transition metal composite oxide falls into a state of so-called cation mixing where some of transition metal elements exist at portions other than transition metal sites of layered rock salt-type crystal structure, i.e. lithium sites. Similar considerations can also be applied in the crystallization process in the firing step. When crystallization of an active material sample is insufficient, cation mixing in the layered rock salt-type crystal structure easily occurs. When the uniformity of the distribution of the transition metal elements is high, the intensity ratio of diffraction peaks between the (003) line and the (104) line tends to be high when X-ray diffraction measurement results are attributed to the space group R3-m. In the present invention, the intensity ratio of diffraction peaks between the (003) line and the (104) line in X-ray diffraction measurement is preferably I₍₀₀₃)/I(₁₀₄) ≥ 1.20. The intensity ratio is preferably I₍₀₀₃₎/I₍₁₀₄) ≥ 1 in a state of the discharge end after charge-discharge. When synthesis conditions and a synthesis procedure for the precursor are inappropriate, the peak intensity ratio is a smaller value, often a value smaller than 1.

By employing the synthesis conditions and synthesis procedure described in this specification, a high-performance positive active material as described above can be obtained. Particularly, there can be provided a positive active material for a nonaqueous electrolyte secondary battery, which can have a high discharge capacity even when the charge upper limit potential is set to a value lower than 4.5 V (vs. Li/Li⁺), for example a charge upper limit potential such as 4.4 V (vs. Li/Li⁺) or 4.3 V (vs. Li/Li⁺) is set.

### Example 1

### Example 1-1

### [Synthesis of Active Material]

Cobalt sulfate heptahydrate, nickel sulfate hexahydrate and manganese sulfate pentahydrate were weighed so that the molar ratio among Co, Ni and Mn was 12.5 : 19.94 : 67.56, and they were dissolved in ion-exchange water to prepare a 2 M aqueous sulfate solution. In the meantime, a 15 L reaction tank was provided. The reaction tank is provided with an outlet so that a solution is discharged from the outlet when the liquid level within the reaction tank exceeds a certain level. In the reaction tank, a stirring impeller is provided and a cylindrical convection plate for causing a convection in the vertical direction during stirring is fixed. Into the reaction tank was poured 7 L of ion-exchange water, and a CO₂ gas was bubbled for 30 minutes to sufficiently dissolve the CO₂ gas in the ion-exchange water. CO₂ gas bubbling was continued until dropwise addition of the aqueous sulfate solution was completed. Next, the reaction tank was set at 50°C, and the stirring impeller was operated at a rotation speed of 1000 rpm. In the reaction tank was added dropwise 2 L of the aqueous sulfate solution little by little. The stirring was continued during dropwise addition. The pH in the reaction tank was always monitored, and an aqueous solution with 2 M sodium carbonate and 0.2 M ammonia dissolved therein was added so that the pH fell within a range of 8.6 ± 0.2. While the aqueous sulfate solution was added dropwise, a part of the solution containing a reaction product was discharged through the outlet to outside the reaction tank, but the discharged solution until completion of dropwise addition of the total amount of 2 L of the aqueous sulfate solution was discarded without being sent back into the reaction tank. After completion of dropwise addition, a coprecipitation product was separated by suction filtration from the solution containing a reaction product, and washed with ion-exchange water for removing deposited sodium ions. Next, the product was dried in an oven at 100°C under normal pressure in an air atmosphere. After drying, the product was mildly ground in a mortar for several minutes so that aggregation of secondary particles was released and the particle size was equalized. In this way, a powder of a coprecipitation carbonate precursor was obtained.

Next, the coprecipitation carbonate precursor was subjected to a pre-firing step. In an empty sagger (internal volume: 80 mm × 80 mm × 44 mm), the mass of which had been measured beforehand, 30 g of the coprecipitation carbonate precursor was weighed. The sagger was placed in a box-type electric furnace, heated in the air at a temperature elevation rate of 100°C/hr to 300°C, a pre-firing temperature, and held at 300°C for 5 hours. Thereafter, it was confirmed that the temperature was 50°C or lower after about 5 hours of natural furnace cooling, the sagger was taken out from the electric furnace, and the mass was measured again. From the results of measurement of the mass before and after pre-firing, the mass of the coprecipitation carbonate precursor, which had been 30 g before pre-firing, was found to be 25.1 g after pre-firing. Based on the mass change determined from the results of measurement of the mass before and after pre-firing, the mass ratio among Co, Ni and Mn in the coprecipitation carbonate precursor after the pre-firing step was calculated, and used as a basis for determining the mixing ratio when the coprecipitation carbonate precursor was mixed with a Li salt in the subsequent firing step.

Then, 9.699 g of lithium carbonate and 19.04 g of the coprecipitation carbonate precursor after the pre-firing step were weighed so as to achieve a Li/Me (Co + Ni + Mn) ratio of 1.3, and mixed until a homogeneous mixture was obtained using a ball mill under conditions where primary particles are not crushed. The mixture was almost totally transferred into a sagger (internal volume: 54 mm × 54 mm × 34 mm), and the sagger was heated from room temperature to 900°C, a firing temperature, over 4 hours, and held at 900°C for 10 hours. Thereafter, it was confirmed that the temperature was 50°C or lower after about 12 hours of natural furnace cooling, and the sagger was taken out from the electric furnace. The obtained fired product was mildly ground in a mortar for several minutes so that aggregation of secondary particles was released and the particle size was equalized.

In this way, a lithium transition metal composite oxide according to Example 1-1 was prepared. The lithium transition metal composite oxide was confirmed to have a composition represented by

Li[Li_{1.13}Co_{0.11}Ni_{0.17}Mn₀.₅₉]O₂.

### Example 1-2

A lithium transition metal composite oxide according to Example 1-2 was prepared in the same manner as in Example 1-1 except that the pre-firing temperature of a coprecipitation carbonate precursor was changed to 400°C.

### Example 1-3

A lithium transition metal composite oxide according to Example 1-3 was prepared in the same manner as in Example 1-1 except that the pre-firing temperature of a coprecipitation carbonate precursor was changed to 500°C.

### Comparative Example 1-1

A lithium transition metal composite oxide according to Comparative Example 1-1 was prepared in the same manner as in Example 1-1 except that the pre-firing temperature of a coprecipitation carbonate precursor was changed to 600°C.

### Comparative Example 1-2

A lithium transition metal composite oxide according to Comparative Example 1-2 was prepared in the same manner as in Example 1-1 except that the pre-firing temperature of a coprecipitation carbonate precursor was changed to 700°C.

### Comparative Example 1-3

A lithium transition metal composite oxide according to Comparative Example 1-3 was prepared in the same manner as in Example 1-1 except that 9.699 g of lithium carbonate and 22.78 g of a coprecipitation carbonate precursor, which had not been pre-fired, were weighed so as to achieve a Li/Me of 1.3.

For equalizing the Li/Me, a coprecipitation carbonate precursor, which was not pre-fired, should be added in an amount larger by a non-decarbonized fraction than that of a coprecipitation carbonate precursor which was pre-fired at 300°C or higher. The same is applicable to comparative examples below.

### Example 1-4

A lithium transition metal composite oxide according to Example 1-4 was prepared in the same manner as in Example 1-1 except that a change was made so as to achieve a Li/Me of 1.2 (9.389 g of lithium carbonate and 19.54 g of a coprecipitation carbonate precursor after the step of pre-firing at 300°C were weighed).

### Comparative Example 1-4

A lithium transition metal composite oxide according to Comparative Example 1-4 was prepared in the same manner as in Comparative Example 1-3 except that a change was made so as to achieve a Li/Me of 1.2 (9.389 g of lithium carbonate and 23.39 g of a coprecipitation carbonate precursor, which had not been pre-fired, were weighed).

### Example 1-5

A lithium transition metal composite oxide according to Example 1-5 was prepared in the same manner as in Example 1-1 except that a change was made so as to achieve a Li/Me of 1.25 (9.548 g of lithium carbonate and 19.28 g of a coprecipitation carbonate precursor after the step of pre-firing at 300°C were weighed).

### Comparative Example 1-5

A lithium transition metal composite oxide according to Comparative Example 1-5 was prepared in the same manner as in Comparative Example 1-3 except that a change was made so as to achieve a Li/Me of 1.25 (9.548 g of lithium carbonate and 23.08 g of a coprecipitation carbonate precursor, which had not been pre-fired, were weighed).

### Example 1-6

A lithium transition metal composite oxide according to Example 1-6 was prepared in the same manner as in Example 1-1 except that a change was made so as to achieve a Li/Me of 1.325 (9.772 g of lithium carbonate and 18.92 g of a coprecipitation carbonate precursor after the step of pre-firing at 300°C were weighed).

### Comparative Example 1-6

A lithium transition metal composite oxide according to Comparative Example 1-6 was prepared in the same manner as in Comparative Example 1-3 except that a change was made so as to achieve a Li/Me of 1.325 (9.772 g of lithium carbonate and 22.64 g of a coprecipitation carbonate precursor, which had not been pre-fired, were weighed).

### Example 1-7

A lithium transition metal composite oxide according to Example 1-7 was prepared in the same manner as in Example 1-1 except that a change was made so as to achieve a Li/Me of 1.35 (9.844 g of lithium carbonate and 18.80 g of a coprecipitation carbonate precursor after the step of pre-firing at 300°C were weighed).

### Comparative Example 1-7

A lithium transition metal composite oxide according to Comparative Example 1-7 was prepared in the same manner as in Comparative Example 1-3 except that a change was made so as to achieve a Li/Me of 1.35 (9.844 g of lithium carbonate and 22.50 g of a coprecipitation carbonate precursor, which had not been pre-fired, were weighed).

### Example 1-8

A lithium transition metal composite oxide according to Example 1-8 was prepared in the same manner as in Example 1-1 except that a change was made so as to achieve a Li/Me of 1.375 (9.914 g of lithium carbonate and 18.69 g of a coprecipitation carbonate precursor after the step of pre-firing at 300°C were weighed).

### Comparative Example 1-8

A lithium transition metal composite oxide according to Comparative Example 1-8 was prepared in the same manner as in Comparative Example 1-3 except that a change was made so as to achieve a Li/Me of 1.375 (9.914 g of lithium carbonate and 22.36 g of a coprecipitation carbonate precursor, which had not been pre-fired, were weighed).

### Example 1-9

A lithium transition metal composite oxide according to Example 1-9 was prepared in the same manner as in Example 1-1 except that a change was made so as to achieve a Li/Me of 1.4 (9.982 g of lithium carbonate and 18.58 g of a coprecipitation carbonate precursor after the step of pre-firing at 300°C were weighed).

### Comparative Example 1-9

A lithium transition metal composite oxide according to Comparative Example 1-9 was prepared in the same manner as in Comparative Example 1-3 except that a change was made so as to achieve a Li/Me of 1.4 (9.982 g of lithium carbonate and 22.23 g of a coprecipitation carbonate precursor, which had not been pre-fired, were weighed).

### Comparative Example 1-10

A lithium transition metal composite oxide according to Comparative Example 1-10 was prepared in the same manner as in Example 1-1 except that a change was made so as to achieve a Li/Me of 1.5 (10.24 g of lithium carbonate and 18.15 g of a coprecipitation carbonate precursor after the step of pre-firing at 300°C were weighed).

### Comparative Example 1-11

A lithium transition metal composite oxide according to Comparative Example 1-11 was prepared in the same manner as in Comparative Example 1-3 except that a change was made so as to achieve a Li/Me of 1.5 (10.24 g of lithium carbonate and 21.72 g of a coprecipitation carbonate precursor, which had not been pre-fired, were weighed).

### Example 2

### Example 2-1

### [Synthesis of Active Material]

First, 14.08 g of cobalt sulfate heptahydrate, 21.00 g of nickel sulfate hexahydrate and 65.27 g of manganese sulfate pentahydrate were weighed, and totally dissolved in 200 ml of ion-exchange water to prepare a 2.0 M aqueous sulfate solution of which the molar ratio of Co : Ni : Mn was 12.5 : 19.94 : 67.56. On the other hand, 750 ml of ion-exchange water was poured into a 2 L reaction tank, and a CO₂ gas was bubbled for 30 minutes to dissolve the CO₂ gas in ion-exchange water. The temperature of the reaction tank was set at 50°C (±2°C), and the aqueous sulfate solution was added dropwise at a rate of 3 ml/min while the contents in the reaction tank were stirred at a rotation speed of 700 rpm using a paddle impeller equipped with a stirring motor. Here, control was performed so that the pH in the reaction tank was kept at 7.9 (±0.05) by appropriately adding dropwise an aqueous solution containing 2.0 M sodium carbonate and 0.4 M ammonia over a time period between the start and the end of dropwise addition. After completion of dropwise addition, stirring the contents in the reaction tank was continued for further 3 hours. After stirring was stopped, the reaction tank was left standing for 12 hours or more.

Next, particles of a coprecipitation carbonate generated in the reaction tank were separated using a suction filtration device, sodium ions deposited on the particles were further washed off using ion-exchange water, and the particles were dried at 100°C under normal pressure in an air atmosphere using an electric furnace. Thereafter, the particles were ground in a mortar for several minutes to equalize the particle size. In this way, a coprecipitation carbonate precursor was prepared.

Then, 9.699 g of lithium carbonate was added to 22.78 g of the coprecipitation carbonate precursor, and the mixture was mixed until a homogeneous mixture was obtained using a ball mill under conditions where primary particles are not crushed, thereby preparing a mixed powder of which the molar ratio of Li: (Co, Ni, Mn) was 130 : 100.

The mixed powder was almost totally transferred into a sagger (internal volume: 54 mm × 54 mm × 34 mm), and the sagger was placed in a box-type electric furnace (Model: AMF20), and heated to 250°C from normal temperature over 2.5 hours, and pre-firing was performed at 250°C for 10 hours. The box-type electric furnace had an internal dimension of 10 cm (height), 20 cm (width) and 30 cm (depth), and provided with electrically heated wires at intervals of 20 cm in the width direction. After pre-firing, a heater was switched off, and the alumina boat was naturally cooled as it was left standing in the furnace. After elapse of a whole day and night, the sagger was taken out from the electric furnace after confirming that the temperature of the furnace was 100°C or lower, and the contents of the sagger were totally transferred into a mortar, and mildly ground for several minutes so that aggregation of secondary particles was released and the particle size was equalized.

Next, the mixed powder was transferred into the sagger again and the sagger was placed in the box-type electric furnace, and heated to 900°C from normal temperature over 4 hours under normal pressure in an air atmosphere, and pre-firing was performed at 900°C for 10 hours. After pre-firing, a heater was switched off, and the sagger was naturally cooled as it was left standing in the furnace. After elapse of a whole day and night, the sagger was taken out from the electric furnace after confirming that the temperature of the furnace was 100°C or lower, and the contents of the sagger were mildly ground in a mortar for several minutes so that aggregation of secondary particles was released and the particle size was equalized.

In this way, a lithium transition metal composite oxide according to Example 2-1 was prepared. The lithium transition metal composite oxide was confirmed to have a composition represented by

Li_{1.13}Co_{0.11}Ni_{0.17}Mn_{0.59}O₂.

### Example 2-2

A lithium transition metal composite oxide according to Example 2-2 was prepared in the same manner as in Example 2-1 except that the pre-firing temperature of the mixed powder was changed to 350°C.

### Example 2-3

A lithium transition metal composite oxide according to Example 2-3 was prepared in the same manner as in Example 2-1 except that the pre-firing temperature of the mixed powder was changed to 450°C.

### Example 2-4

A lithium transition metal composite oxide according to Example 2-4 was prepared in the same manner as in Example 2-1 except that the pre-firing temperature of the mixed powder was changed to 550°C.

### Example 2-5

A lithium transition metal composite oxide according to Example 2-5 was prepared in the same manner as in Example 2-1 except that the pre-firing temperature of the mixed powder was changed to 650°C.

### Example 2-6

A lithium transition metal composite oxide according to Example 2-6 was prepared in the same manner as in Example 2-1 except that the pre-firing temperature of the mixed powder was changed to 750°C.

### Comparative Example 2-1

A lithium transition metal composite oxide according to Comparative Example 2-1 was prepared in the same manner as in Example 2-1 except that the mixed powder was not pre-fired.

### Example 2-7

A lithium transition metal composite oxide according to Example 2-7 was prepared in the same manner as in Example 2-4 except that a change was made so as to achieve a Li/Me of 1.2 (9.159 g of lithium carbonate was added to 23.30 g of a coprecipitation carbonate precursor).

### Comparative Example 2-2

A lithium transition metal composite oxide according to Comparative Example 2-2 was prepared in the same manner as in Comparative Example 2-1 except that a change was made so as to achieve a Li/Me of 1.2 (9.159 g of lithium carbonate was added to 23.30 g of a coprecipitation carbonate precursor).

### Example 2-8

A lithium transition metal composite oxide according to Example 2-8 was prepared in the same manner as in Example 2-4 except that a change was made so as to achieve a Li/Me of 1.25 (9.432 g of lithium carbonate was added to 23.04 g of a coprecipitation carbonate precursor).

### Comparative Example 2-3

A lithium transition metal composite oxide according to Comparative Example 2-3 was prepared in the same manner as in Comparative Example 2-1 except that a change was made so as to achieve a Li/Me of 1.25 (9.432 g of lithium carbonate was added to 23.04 g of a coprecipitation carbonate precursor).

### Example 2-9

A lithium transition metal composite oxide according to Example 2-9 was prepared in the same manner as in Example 2-4 except that a change was made so as to achieve a Li/Me of 1.325 (9.830 g of lithium carbonate was added to 22.65 g of a coprecipitation carbonate precursor).

### Comparative Example 2-4

A lithium transition metal composite oxide according to Comparative Example 2-4 was prepared in the same manner as in Comparative Example 2-1 except that a change was made so as to achieve a Li/Me of 1.325 (9.830 g of lithium carbonate was added to 22.65 g of a coprecipitation carbonate precursor).

### Example 2-10

A lithium transition metal composite oxide according to Example 2-10 was prepared in the same manner as in Example 2-4 except that a change was made so as to achieve a Li/Me of 1.35 (9.960 g of lithium carbonate was added to 22.53 g of a coprecipitation carbonate precursor).

### Comparative Example 2-5

A lithium transition metal composite oxide according to Comparative Example 2-5 was prepared in the same manner as in Comparative Example 2-1 except that a change was made so as to achieve a Li/Me of 1.35 (9.960 g of lithium carbonate was added to 22.53 g of a coprecipitation carbonate precursor).

### Example 2-11

A lithium transition metal composite oxide according to Example 2-11 was prepared in the same manner as in Example 2-4 except that a change was made so as to achieve a Li/Me of 1.375 (10.09 g of lithium carbonate was added to 22.40 g of a coprecipitation carbonate precursor).

### Comparative Example 2-6

A lithium transition metal composite oxide according to Comparative Example 2-6 was prepared in the same manner as in Comparative Example 2-1 except that a change was made so as to achieve a Li/Me of 1.375 (10.09 g of lithium carbonate was added to 22.40 g of a coprecipitation carbonate precursor).

### Example 2-12

A lithium transition metal composite oxide according to Example 2-12 was prepared in the same manner as in Example 2-4 except that a change was made so as to achieve a Li/Me of 1.4 (10.22 g of lithium carbonate was added to 22.28 g of a coprecipitation carbonate precursor).

### Comparative Example 2-7

A lithium transition metal composite oxide according to Comparative Example 2-7 was prepared in the same manner as in Comparative Example 2-1 except that a change was made so as to achieve a Li/Me of 1.4 (10.22 g of lithium carbonate was added to 22.28 g of a coprecipitation carbonate precursor).

### Comparative Example 2-8

A lithium transition metal composite oxide according to Comparative Example 2-8 was prepared in the same manner as in Example 2-4 except that a change was made so as to achieve a Li/Me of 1.5 (10.71 g of lithium carbonate was added to 21.80 g of a coprecipitation carbonate precursor).

### Comparative Example 2-9

A lithium transition metal composite oxide according to Comparative Example 2-9 was prepared in the same manner as in Comparative Example 2-1 except that a change was made so as to achieve a Li/Me of 1.5 (10.71 g of lithium carbonate was added to 21.80 g of a coprecipitation carbonate precursor).

### Comparative Example 2-10

First, 3 g of the lithium transition metal composite oxide according to Example 2-4 was weighed, and transferred into an alumina container attached to a planetary ball mill device (Pulverisette 6 manufactured by FRITSCH Co., Ltd.). Further, accessory alumina balls (10 mmϕ) were introduced, and a grinding treatment was performed at a rotation speed of 200 rpm for 1 hour using the device. In this way, a lithium transition metal composite oxide according to Comparative Example 2-10 was prepared.

### [Measurement of Particle Size Distribution]

The lithium transition metal composite oxides according to Examples 1-1 to 1-9, Comparative Examples 1-1 to 1-11, Examples 2-1 to 2-12 and Comparative Examples 2-1 to 2-10 were measured for the particle size distribution in accordance with the following conditions and procedure. Microtrac (model: MT 3000) manufactured by NIKKISO CO., LTD. was used as a measuring apparatus. The measuring apparatus includes an optical stage, a sample supply section and a computer including control software, and a wet cell having a laser light transmission window is placed on the optical stage. For the measurement principle, a wet cell, through which a dispersion liquid with a measurement sample dispersed in a dispersion solvent is circulated, is irradiated with laser light, and a distribution of scattered light from the measurement sample is converted into the particle size distribution. The dispersion liquid is stored in a sample supply section, and circularly supplied to the wet cell by a pump. The sample supply section constantly receives ultrasonic vibrations. Water was used as a dispersion solvent. Microtrac DHS for Win 98 (MT 3000) was used as measurement control software. For "substance information" set and input in the measuring apparatus, a value of 1.33 was set as the "refractive index" of the solvent, "Transparent" was selected as the "transparency", and "Nonspherical" was selected as the "spherical particle". A "Set Zero" operation is performed prior to measurement of the sample. The "Set Zero" operation is an operation for subtracting influences on subsequent measurements of disturbance factors (glass, contamination of the glass wall face, glass irregularities, etc.) other than scattered light from particles. In the "Set Zero" operation, only water as a dispersion solvent is fed in a sample supply section, background measurement is performed with only water as a dispersion solvent being circulated through a wet cell, and background data is stored in a computer. Subsequently, a "Sample LD (Sample Loading)" operation is performed. The Sample LD operation is an operation for optimizing the concentration of a sample in a dispersion liquid that is circularly supplied to a wet cell during measurement, wherein a measurement sample is manually introduced into a sample supply section in accordance with instructions of measurement control software until an optimum amount is reached. Subsequently, a "measurement" button is pressed, so that a measurement operation is performed. The measurement operation is repeated twice and as the average thereof, a measurement result is output from a control computer. The measurement result is acquired as a particle size distribution histogram, and the values of D10, D50 and D90 (D10, D50 and D90 are particle sizes at which the cumulative volume in the particle size distribution of secondary particles is 10%, 50% and 90%, respectively).

### [Measurement of Particle Size of Primary Particle]

For the lithium transition metal composite oxides according to Examples 1-1 to 1-9, Comparative Examples 1-1 to 1-11, Examples 2-1 to 2-12 and Comparative Examples 2-1 to 2-10, the lithium transition metal composite oxide on the bottom of each sagger was taken out with a scoopula after the firing step.

The lithium transition metal composite oxide taken out was stuck to a carbon tape, and a Pt sputtering treatment was performed for subjecting the lithium transition metal composite oxide to scanning electron microscope (SEM) observation.

With secondary particles sufficiently enlarged in SEM observation, whether the size of primary particles forming secondary particles was not more than 1 µm or more than 1 µm was determined from a display scale.

### [Measurement of Specific Surface Area]

The amount of adsorption [m²] of nitrogen on the lithium transition metal composite oxides according to Examples 1-1 to 1-9, Comparative Examples 1-1 to 1-11, Examples 2-1 to 2-12 and Comparative Examples 2-1 to 2-10 was determined by a one-point method using a specific surface area measuring apparatus manufactured by Yuasa Ionics Co., Ltd. (trade name: MONOSORB). A vale obtained by dividing the obtained amount of adsorption (m²) by the mass (g) of each lithium transition metal composite oxide was defined as a BET specific surface area. For measurement, gas adsorption was performed by cooling using liquid nitrogen. Pre-heating was performed at 120°C for 15 minutes before cooling. The charge amount of a measurement sample was 0.5 ± 0.01 g.

### [Measurement of Tap Density]

A value obtained by dividing the volume by the mass of each of the lithium transition metal composite oxides according to Examples 1-1 to 1-9, Comparative Examples 1-1 to 1-11, Examples 2-1 to 2-12 and Comparative Examples 2-1 to 2-10 after being counted 300 times using a tapping apparatus (made in 1968) manufacture by REI ELECTRIC CO. LTD. was defined as a tap density. In measurement, a graduated cylinder of 10⁻² dm³ was charged with 2 g ± 0.2 g of each lithium transition metal composite oxide.

### [Preparation and Evaluation of Nonaqueous Electrolyte Secondary Battery]

Using the lithium transition metal composite oxide of each of Examples 1-1 to 1-9, Comparative Examples 1-1 to 1-11, Examples 2-1 to 2-12 and Comparative Examples 2-1 to 2-10 as a positive active material for a nonaqueous electrolyte secondary battery, a nonaqueous electrolyte secondary battery was prepared in accordance with the following procedure and battery characteristics were evaluated.

A positive active material, acetylene black (AB) and polyvinylidene fluoride (PVdF) were mixed at a mass ratio of 85 : 8 : 7. To this mixture was added N-methylpyrrolidone as a dispersion medium, and the mixture was kneaded and dispersed to prepare a coating solution. For PVdF, solid mass conversion was performed by using a liquid with a solid dissolved and dispersed therein. A positive electrode plate was prepared by applying the coating solution to an aluminum foil current collector having a thickness of 20 µm.

For the counter electrode (negative electrode), a lithium metal was used for observing the independent behavior of the positive electrode. The lithium metal was brought into close contact with a nickel foil current collector. Here, adjustment was carried out such that the capacity of the nonaqueous electrolyte secondary battery was sufficiently regulated with the positive electrode.

As an electrolyte solution, a solution obtained by dissolving LiPF₆ in a mixed solvent including EC/EMC/DMC at a volume ratio of 6 : 7 : 7 so that the concentration of LiPF₆ was 1 mol/l was used. As a separator, a polypropylene microporous membrane surface-modified with polyacrylate to improve retention of an electrolyte was used. A nickel plate with a lithium metal foil attached thereon was used as a reference electrode. As an outer package, a metal resin composite film of polyethylene terephthalate (15 µm)/aluminum foil (50 µm)/metal-adhesive polypropylene film (50 µm) was used. Electrodes were stored in the outer package such that open ends of a positive electrode terminal, a negative electrode terminal and a reference electrode terminal were exposed to the outside. Fusion margins with the inner surfaces of the above-mentioned metal resin composite film facing each other were airtightly sealed except a portion forming an electrolyte solution filling hole.

The nonaqueous electrolyte secondary battery prepared in the manner described above was subjected to 2 cycles of an initial charge-discharge step at 25°C. Voltage control was all performed for the positive electrode potential. Charge was constant current constant voltage charge with a current of 0.1 CmA and a voltage of 4.6 V. The charge termination condition was set at a time point at which the current value decreased to 0.02 CmA. Discharge was constant current discharge with a current of 0.1 CmA and an end-of-discharge voltage of 2.0 V. In all the cycles, a quiescent period of 30 minutes was set after charge and after discharge. In this way, nonaqueous electrolyte secondary batteries according to Examples 1-1 to 1-9, Comparative Examples 1-1 to 1-11, Examples 2-1 to 2-12 and Comparative Examples 2-1 to 2-10 were completed. Here, for the nonaqueous electrolyte secondary batteries according to Examples 2-1 to 2-12 and Comparative Examples 2-1 to 2-10, a ratio (percentage) of the discharge capacity to the amount of charge in the first cycle in the initial charge-discharge step was recorded as "initial efficiency (%)".

For the completed nonaqueous electrolyte secondary battery, 3 cycles of charge-discharge were performed. Voltage control was all performed for the positive electrode potential. Conditions for the charge-discharge cycles are the same as those for the initial charge-discharge step except that the charge voltage is 4.3 V (vs. Li/Li⁺). In all the cycles, a quiescent period of 30 minutes was set after charge and after discharge. The discharge capacity at this time was recorded as "0.1C capacity (mAh/g)".

Next, a high rate discharge test was conducted in accordance with the following procedure. First, constant current constant voltage charge with a current of 0.1 CmA and a voltage of 4.3 V was performed. After 30 minutes of quiescence, constant current discharge with a current of 1 CmA and an end-of-discharge voltage of 2.0 V was performed, and the discharge capacity at this time was recorded as "1C capacity (mAh/g)".

The values of D10, D50 and D90, particle size of primary particles, BET specific surface area, results of measurement of the tap density, initial efficiency, 0.1C capacity, and 1C capacity (high rate discharge capacity) in examples and comparative examples above are shown in Tables 1 and 2.

**[Table 1]**

| | Precursor pre-firing temperature (°C) | Li/Me (-) | D10 (µm) | D50 (µm) | D90 (µm) | D90/D10 (-) | Primary particle size | BET specific surface area (m²/g) | Tap density (g/cm³) | 0.1C capacity (mAh/g) | 1C capacity (mAh/g) |
|---|---|---|---|---|---|---|---|---|---|---|---|
| Example 1-1 | 300 | 1.3 | 7.4 | 14.5 | 22.2 | 3.0 | ≤ 1 µm | 5.1 | 1.79 | 230 | 192 |
| Example 1-2 | 400 | 1.3 | 7.1 | 14.9 | 25.5 | 3.6 | ≤ 1 µm | 5.6 | 1.71 | 230 | 192 |
| Example 1-3 | 500 | 1.3 | 6.5 | 15.5 | 28.5 | 4.4 | ≤ 1 µm | 5.8 | 1.65 | 228 | 190 |
| Comparative Example 1-1 | 600 | 1.3 | 3.4 | 15.2 | 34.3 | 10.1 | ≤ 1 µm | 4.5 | 1.63 | 226 | 183 |
| Comparative Example 1-2 | 700 | 1.3 | 2.9 | 20.2 | 114 | 39.3 | ≤ 1 µm | 3.4 | 1.60 | 224 | 173 |
| Comparative Example 1-3 | - | 1.3 | 8.8 | 13.7 | 18 | 2.0 | 1 µm < | 4.5 | 1.84 | 220 | 179 |
| Example 1-4 | 300 | 1.2 | 6.5 | 13.9 | 20.2 | 3.1 | ≤ 1 µm | 6.2 | 1.74 | 218 | 175 |
| Comparative Example 1-4 | - | 1.2 | 6.6 | 13.8 | 13.9 | 2.1 | 1 µm < | 5.4 | 1.79 | 210 | 165 |
| Example 1-5 | 300 | 1.25 | 6.9 | 14.1 | 21.4 | 3.1 | ≤ 1 µm | 5.8 | 1.76 | 227 | 189 |
| Comparative Example 1-5 | - | 1.25 | 6.8 | 14.2 | 14.3 | 2.1 | 1 µm < | 5.1 | 1.81 | 215 | 172 |
| Example 1-6 | 300 | 1.325 | 7.7 | 15.1 | 23.1 | 3.0 | ≤ 1 µm | 5.4 | 1.81 | 227 | 191 |
| Comparative Example 1-6 | - | 1.325 | 7.7 | 15.2 | 14.6 | 1.9 | 1 µm < | 4.8 | 1.86 | 214 | 175 |
| Example 1-7 | 300 | 1.35 | 8.1 | 15.4 | 23.5 | 2.9 | ≤ 1 µm | 4.7 | 1.83 | 222 | 189 |
| Comparative Example 1-7 | - | 1.35 | 8.3 | 15.4 | 15.8 | 1.9 | 1 µm < | 4.4 | 1.88 | 211 | 171 |
| Example 1-8 | 300 | 1.375 | 8.4 | 15.6 | 25.2 | 3.0 | ≤ 1 µm | 4.3 | 1.86 | 218 | 187 |
| Comparative Example 1-8 | - | 1.375 | 8.5 | 15.5 | 16.2 | 1.9 | 1 µm < | 4.0 | 1.89 | 207 | 169 |
| Example 1-9 | 300 | 1.4 | 8.7 | 15.8 | 25.2 | 2.9 | ≤ 1 µm | 3.7 | 1.88 | 215 | 185 |
| Comparative Example 1-9 | - | 1.4 | 8.9 | 15.7 | 17.8 | 2.0 | 1 µm < | 3.2 | 1.91 | 201 | 166 |
| Comparative Example 1-10 | 300 | 1.5 | 9.2 | 16.1 | 27.6 | 3.0 | 1 µm < | 2.9 | 1.91 | 185 | 125 |
| Comparative Example 1-11 | - | 1.5 | 9.4 | 16.2 | 18.8 | 2.0 | 1 µm < | 2.7 | 1.93 | 178 | 114 |

**[Table 2]**

| | Li/Me (-) | Pre-firing temperature (°C) | D10 (µm) | D50 (µm) | D90 (µm) | D90/D10 (-) | Primary particle size | BET specific surface area (m²/g) | Tap density (g/cm³) | Initial efficiency (%) | 0.1C capacity (mAh/g) | 1C capacity (mAh/g) |
|---|---|---|---|---|---|---|---|---|---|---|---|---|
| Example 2-1 | 1.3 | 250 | 8.1 | 15.3 | 22.6 | 2.8 | ≤ 1 µm | 4.5 | 1.84 | 92.9 | 231 | 195 |
| Example 2-2 | 1.3 | 350 | 7.9 | 14.7 | 21.3 | 2.7 | ≤ 1 µm | 5.2 | 1.85 | 93.9 | 230 | 196 |
| Example 2-3 | 1.3 | 450 | 7.6 | 15.4 | 30.0 | 3.9 | ≤ 1 µm | 4.5 | 1.85 | 94.1 | 230 | 195 |
| Example 2-4 | 1.3 | 550 | 7.2 | 14.8 | 26.1 | 3.6 | ≤ 1 µm | 6.0 | 1.90 | 92.5 | 235 | 195 |
| Example 2-5 | 1.3 | 650 | 7.5 | 15.4 | 31.1 | 4.1 | ≤ 1 µm | 6.1 | 1.87 | 92.5 | 235 | 194 |
| Example 2-6 | 1.3 | 750 | 8.2 | 13.7 | 18.5 | 2.3 | ≤ 1 µm | 4.8 | 1.78 | 93.5 | 232 | 192 |
| Comparative Example 2-1 | 1.3 | - | 8.8 | 13.7 | 18.0 | 2.0 | 1 µm < | 4.6 | 1.84 | 88.2 | 224 | 187 |
| Example 2-7 | 1.2 | 550 | 7.7 | 13.3 | 22.1 | 2.9 | ≤ 1 µm | 6.5 | 1.75 | 93.5 | 221 | 178 |
| Comparative Example 2-2 | 1.2 | - | 7.9 | 13.5 | 25.6 | 3.2 | 1 µm < | 5.7 | 1.72 | 88.3 | 214 | 173 |
| Example 2-8 | 1.25 | 550 | 8.1 | 14.1 | 27.3 | 3.4 | ≤ 1 µm | 6.3 | 1.82 | 93.3 | 225 | 181 |
| Comparative Example 2-3 | 1.25 | - | 7.4 | 13.9 | 24.4 | 3.3 | 1 µm < | 5.2 | 1.79 | 88.0 | 219 | 177 |
| Example 2-9 | 1.325 | 550 | 7.6 | 14.8 | 23.5 | 3.1 | ≤ 1 µm | 5.7 | 1.92 | 92.3 | 226 | 184 |
| Comparative Example 2-4 | 1.325 | - | 7.9 | 14.6 | 23.7 | 3.0 | 1 µm < | 4.3 | 1.90 | 86.8 | 220 | 178 |
| Example 2-10 | 1.35 | 550 | 7.2 | 14.3 | 26.8 | 3.7 | ≤ 1 µm | 5.2 | 1.93 | 92.1 | 218 | 179 |
| Comparative Example 2-5 | 1.35 | - | 8.1 | 15.2 | 25.8 | 3.2 | 1 µm < | 4.1 | 1.89 | 84.1 | 212 | 172 |
| Example 2-11 | 1.375 | 550 | 7.5 | 15.0 | 25.2 | 3.4 | ≤ 1 µm | 4.4 | 1.95 | 91.5 | 213 | 171 |
| Comparative Example 2-6 | 1.375 | - | 7.7 | 14.8 | 22.8 | 3.0 | 1 µm < | 3.8 | 1.91 | 82.0 | 207 | 166 |
| Example 2-12 | 1.4 | 550 | 7.8 | 14.3 | 28.7 | 3.7 | ≤ 1 µm | 3.5 | 1.96 | 91.2 | 202 | 165 |
| Comparative Example 2-7 | 1.4 | - | 7.3 | 14.7 | 26.5 | 3.6 | 1 µm < | 3.1 | 1.91 | 80.2 | 193 | 160 |
| Comparative Example 2-8 | 1.5 | 550 | 7.6 | 14.7 | 25.3 | 3.3 | 1 µm < | 2.7 | 2.01 | 85.1 | 188 | 154 |
| Comparative Example 2-9 | 1.5 | - | 7.6 | 14.5 | 23.6 | 3.1 | 1 µm < | 2.5 | 1.99 | 77.5 | 181 | 148 |
| Comparative Example 2-10 | 1.3 | 550 | 3.1 | 7.6 | 10.6 | 3.4 | ≤ 1 µm | 11.2 | 1.15 | 65.0 | 170 | 56 |

From Table 1, it is apparent that in Examples 1-1 to 1-9 where the temperature of pre-firing the precursor of a transition metal oxide is 300 to 500°C and the Li/Me is 1.2 to 1.4, a lithium transition metal composite oxide is obtained in which D10 is 6 to 9 µm, D50 is 13 to 16 µm and D90 is 18 to 32 µm, the D90/D10 is 2.9 to 4.4, and the particle size of primary particles is 1 µm or less. An active material containing the lithium transition metal composite oxide has a high discharge capacity (0.1C capacity) of 215 mAh/g or more and a 1C capacity of 175 mAh/g or more, so that high rate discharge performance is improved (in Example 1-4, the 1C capacity is lower than that in Comparative Example 1-3, but high rate discharge performance is improved as compared to Comparative Example 1-4 having the same Li/Me). The BET specific surface area was 3.7 to 6.2 m²/g, and the tap density was 1.65 to 1.88 g/cm³.

In the meantime, in Comparative Examples 1-3 to 1-9 where the precursor is not pre-fired and the Li/Me is 1.2 to 1.4, a lithium transition metal composite oxide is obtained in which D90 is 18 µm or less, the D90/D10 is 2.1 or less, and the particle size of primary particles is more than 1 µm. An active material containing the lithium transition metal composite oxide is poor in high rate discharge performance with the 1C capacity being 179 mAh/g or less.

In Comparative Examples 1-1 and 1-2 where the temperature of pre-firing the precursor was higher than 500°C, spherical particles were massively collapsed, D10 was 3.4 or less, D90 was 34.3 or more and D90/D10 was 10 or more at 600°C or higher. The BET specific surface area was gradually decreased, the tap density was significantly decreased to about 1.6 g/cm³, and the 1C capacity was gradually reduced, so that improvement of high rate discharge performance was not sufficient.

In Comparative Examples 1-10 and 1-11 where the Li/Me is 1.5, D10 is 9 µm or more and D50 is 16 µm or more, the particle size of primary particles is more than 1 µm, and the 0.1C capacity and the 1C capacity are both low irrespective of whether the precursor is pre-fired or not, so that discharge performance is poor.

From Table 2, it is apparent that in Examples 2-1 to 2-12 where the mixed powder of a coprecipitation precursor of a transition metal carbonate and a lithium compound is pre-fired at 250 to 750°C and the Li/Me of 1.2 to 1.4, a lithium transition metal composite oxide is obtained in which D10 is 7 to 9 µm, D50 is 13 to 16 µm and D90 is 18 to 32 µm, and the particle size of primary particles is 1 µm or less. A nonaqueous electrolyte secondary battery including an active material containing the lithium transition metal composite oxide has a high discharge capacity (0.1C capacity) of 200 mAh/g or more, and has a high 1C capacity as compared to an active material containing a lithium transition metal composite oxide which is not pre-fired, so that high rate discharge performance is improved. Further, it is apparent that the initial efficiency was high and 91% or more. In Examples 1 to 12, the BET specific surface area was 3.5 to 6.5 m²/g, and the tap density was 1.75 to 1.96 g/cm³.

In the meantime, in Comparative Examples 2-1 to 2-7 where the mixed powder is not pre-fired and the Li/Me is 1.2 to 1.4, a lithium transition metal composite oxide is obtained in which the particle size of primary particles is more than 1 µm. An active material containing the lithium transition metal composite oxide is inferior in high rate discharge performance to an active material containing a pre-fired lithium transition metal composite oxide, and has a poor initial efficiency of less than 90%.

In Comparative Example 1-8 where the Li/Me is 1.5, the particle size of primary particles is more than 1 µm even when the mixed powder is pre-fired, the 0.1C capacity and the 1C capacity are both low, so that discharge performance is poor, and the initial efficiency is only about 85%, and is not remarkably improved as compared to Comparative Example 1-9 where pre-firing is not performed.

Further, in the case where even when the particle size of primary particles is 1 µm or less, the lithium transition metal composite oxide is ground to fail to satisfy the requirements of "D10 of 6 to 9 µm, D50 of 13 to 16 µm and D90 of 18 to 32 µm" as in Comparative Example 1-10, the discharge capacity is low, high rate discharge performance is poor and initial efficiency is low.

In the above-described Examples, the value of a molar ratio of Li to the transition metal element Me (Li/Me) in the lithium transition metal composite oxide has been described based on the mixing ratio of a coprecipitation carbonate precursor subjected to the firing step and lithium carbonate. The values of D10, D50 and D90 in the particle size distribution of secondary particles in the lithium transition metal composite oxide have been described based on results of measuring the particle size distribution for the lithium transition metal composite oxide before preparation of an electrode. However, for a nonaqueous electrolyte secondary battery having a history of charge-discharge, the value of Li/Me and the values of D10, D50 and D90 can be determined by performing a treatment in accordance with the following procedure to take a positive active material.

First, a positive active material contained in a positive electrode should be brought into a state of the discharge end sufficiently. As a method for this, it is preferable to perform an operation of discharging the positive electrode with a cell formed between the positive electrode and a negative electrode capable of releasing lithium ions in an amount required for bringing the positive electrode into a discharge end state sufficiently. As the negative electrode, metal lithium may be used. The cell may be a two-terminal cell, but preferably a three-terminal cell provided with a reference electrode is used to control and monitor the positive electrode potential with respect to the reference electrode. Where possible, the electrolyte solution to be used for the cell preferably has a composition identical to that of the nonaqueous electrolyte that is used for the nonaqueous electrolyte secondary battery. As the operation of discharging the positive electrode using the cell, mention is made of a method in which continuous discharge or intermittent discharge is performed with a discharge termination potential or 2.0 V (vs. Li/Li⁺) at a current of 0.1 CmA or less. After the above-described discharge operation is performed, a sufficient quiescent period is provided to confirm that the open circuit potential is 3.0 (vs. Li/Li⁺) or less. When the open circuit potential after the discharge operation is more than 3.0 V (vs. Li/Li⁺), it is required to repeat the operation by employing a lower value of discharge current until the open circuit potential becomes 3.0 V (vs. Li/Li⁺) or less.

The positive electrode which has undergone the above-mentioned operation is preferred to be freed of a deposited electrolyte solution after being taken out from the cell. When an electrolyte solution is deposited, a lithium salt dissolved in the electrolyte solution affects the result of analysis of the Li/Me value. Examples of the method for removing an electrolyte solution include washing with a volatile solvent. The volatile solvent is preferably one in which a lithium salt is easily dissolved. A specific example is dimethyl carbonate. The volatile solvent is required to have a water content reduced to a lithium battery grade. When the water content is high, the value of Li/Me may not be accurately determined due to elution of Li in the positive active material.

Next, a positive electrode current collector is removed from the positive electrode, and a positive composite containing a positive active material is taken. The positive composite often contains a conducting material and a binder in addition to a positive active material. Examples of the method for removing a binder from a positive composite containing the binder include a method in which a solvent capable of dissolving a binder is used. Specific examples include a method in which, for example, when the binder is supposed to be polyvinylidene fluoride, a positive composite is immersed in a sufficient amount of N-methylpyrrolidone, refluxed at 150°C for several hours and then separated into a powder containing a positive active material and a solvent containing a binder using filtration or the like. Examples of the method for removing a conducting material from the powder containing a positive active material from which the binder has been separated and removed include a method in which, for example, when the conducting material is supposed to be a carbonaceous material such as acetylene black, the carbonaceous material is oxidized and decomposed to be removed by a heat treatment. Conditions for the heat treatment are required to include a temperature equal to or higher than a temperature at which the conducting material is thermally decomposed in an atmosphere including oxygen. When the heat treatment temperature is excessively high, the physical properties of the positive active material may be changed, and therefore a temperature that does not affect the physical properties of the positive active material wherever possible is preferable. For example, in the case of the positive active material of the present invention, mention is made of a temperature of 700°C in the air.

In the research institution to which the inventor belongs, a positive active material was taken from a nonaqueous electrolyte secondary battery including a general lithium transition metal composite oxide as the positive active material by passing through the above-mentioned operation procedure, and the value of Li/Me and the values of D10, D50 and D90 were measured to confirm that values for the positive active material before preparation of the electrode were almost unchanged.

### INDUSTRIAL APPLICABILITY

The active material of the present invention is used for a nonaqueous electrolyte secondary battery having a high discharge capacity and excellent high rate discharge performance and initial efficiency. Therefore, the active material of the present invention can be effectively used for nonaqueous electrolyte secondary batteries such as those of power sources for electric cars, power sources for electronic devices and power sources for electric power storage.

## Claims

1. A method for manufacturing an active material for a nonaqueous electrolyte secondary battery containing a lithium transition metal composite oxide having an α-NaFeO₂-type crystal structure and being represented by a compositional formula: Li_{1+α}Me_{1-α}O₂ wherein Me is a transition metal element containing Co, Ni and Mn and α > 0, the method comprising the steps of:
coprecipitating in a solution a compound of a transition metal element Me containing Co, Ni and Mn to produce a coprecipitation precursor of a transition metal oxide;
pre-firing the coprecipitation precursor at 300 to 500°C; and
mixing the pre-fired coprecipitation precursor with a lithium compound so that a molar ratio of Li to the transition metal element Me (Li/Me) in the lithium transition metal composite oxide is 1.2 to 1.4, and firing a mixture at 800 to 1000°C,
wherein in the lithium transition metal composite oxide, D10 is 6 to 9 µm, D50 is 13 to 16 µm and D90 is 18 to 32 µm where particle sizes at cumulative volumes of 10%, 50% and 90% in a particle size distribution of secondary particles are D10, D50 and D90, respectively, and
a particle size of a primary particle is 1 µm or less.

2. A method for manufacturing an active material for a nonaqueous electrolyte secondary battery containing a lithium transition metal composite oxide having an α-NaFeO₂-type crystal structure and being represented by a compositional formula: Li_{1+α}Me_{1-α}O₂ wherein Me is a transition metal element containing Co, Ni and Mn and α > 0, the method comprising the steps of:
coprecipitating in a solution a compound of a transition metal element Me containing Co, Ni and Mn to obtain a coprecipitation precursor of a transition metal carbonate;
pre-firing at 250 to 750°C a mixed powder obtained by mixing the coprecipitation precursor with a lithium compound so that a molar ratio of Li to the transition metal element Me (Li/Me) in the lithium transition metal composite oxide is 1.2 to 1.4; and
re-mixing the pre-fired mixed powder and firing a mixture at 800 to 1000°C,
wherein in the lithium transition metal composite oxide, D10 is 6 to 9 µm, D50 is 13 to 16 µm and D90 is 18 to 32 µm where particle sizes at cumulative volumes of 10%, 50% and 90% in a particle size distribution of secondary particles are D10, D50 and D90, respectively, and
a particle size of a primary particle is 1 µm or less.

3. The method for manufacturing an active material for a nonaqueous electrolyte secondary battery according to claim 1 or 2, wherein the lithium compound is a carbonate.

4. The method for manufacturing an active material for a nonaqueous electrolyte secondary battery according to any one of claims 1 to 3, wherein the lithium transition metal composite oxide has a BET specific surface area of 3.5 to 6.5 m²/g.

5. The method for manufacturing an active material for a nonaqueous electrolyte secondary battery according to any one of claims 1 to 4, wherein the lithium transition metal composite oxide has a tap density of 1.65 to 1.96 g/cm³.

6. An active material for a nonaqueous electrolyte secondary battery, wherein the active material is obtainable by the method for manufacturing an active material for a nonaqueous electrolyte secondary battery according to any one of claims 1 to 5.

7. An electrode for a nonaqueous electrolyte secondary battery comprising the active material for a nonaqueous electrolyte secondary battery according to claim 6.

8. A nonaqueous electrolyte secondary battery comprising the electrode for a nonaqueous electrolyte secondary battery according to claim 7.

## Patentansprüche

1. Verfahren zur Herstellung eines aktiven Materials für eine Sekundärbatterie mit nichtwässrigem Elektrolyten, das ein Lithium-Übergangsmetall-Verbundoxid mit einer Kristallstruktur vom Typ α-NaFeO₂ enthält und durch eine Summenformel Li_{1+α}Me_{1-α}O₂ repräsentiert wird, wobei Me ein Übergangsmetallelement ist, das Co, Ni und Mn enthält, und α > 0 ist, wobei das Verfahren die folgenden Schritte umfasst:
Copräzipitieren einer Verbindung eines Übergangsmetallelements Me, das Co, Ni und Mn enthält, in einer Lösung, um einen Copräzipitations-Vorläufer eines Übergangsmetalloxids zu erzeugen,
Vorbrennen des Copräzipitations-Vorläufers bei 300 bis 500 °C und
Mischen des vorgebrannten Copräzipitations-Vorläufers mit einer Lithium-Verbindung, so dass ein molares Verhältnis von Li zu Übergangsmetallelement Me (Li/Me) in dem Lithium-Übergangsmetall-Verbundoxid 1,2 bis 1,4 ist, und Brennen einer Mischung bei 800 bis 1000 °C,
wobei in dem Lithium-Übergangsmetall-Verbundoxid D10 6 bis 9 µm ist, D50 13 bis 16 µm ist und D90 18 bis 32 µm ist, wobei die Partikelgrößen bei kumulativen Volumina von 10 %, 50 % und 90 % in einer Partikelgrößenverteilung von sekundären Partikeln D10, D50 bzw. D90 sind und eine Partikelgröße einer primären Partikel 1 µm oder weniger ist.

2. Verfahren zur Herstellung eines aktiven Materials für eine Sekundärbatterie mit nichtwässrigem Elektrolyten, das ein Lithium-Übergangsmetall-Verbundoxid mit einer Kristallstruktur vom Typ α-NaFeO₂ enthält und durch eine Summenformel Li_{1+α}Me_{1-α}O₂ repräsentiert wird, wobei Me ein Übergangsmetallelement ist, das Co, Ni und Mn enthält, und α > 0 ist, wobei das Verfahren die folgenden Schritte umfasst:
Copräzipitieren einer Verbindung eines Übergangsmetallelements Me, das Co, Ni und Mn enthält, in einer Lösung, um einen Copräzipitations-Vorläufer eines Übergangsmetallcarbonats zu erhalten,
Vorbrennen eines gemischten Pulvers, das durch Mischen des Copräzipitations-Vorläufers mit einer Lithium-Verbindung erhalten wird, bei 250 bis 750 °C, so dass ein molares Verhältnis von Li zu Übergangsmetallelement Me (Li/Me) in dem Lithium-Übergangsmetall-Verbundoxid 1,2 bis 1,4 ist, und
nochmaliges Mischen des vorgebrannten gemischten Pulvers und Brennen einer Mischung bei 800 bis 1000 °C,
wobei in dem Lithium-Übergangsmetall-Verbundoxid D10 6 bis 9 µm ist, D50 13 bis 16 µm ist und D90 18 bis 32 µm ist, wobei die Partikelgrößen bei kumulativen Volumina von 10 %, 50 % und 90 % in einer Partikelgrößenverteilung von sekundären Partikeln D10, D50 bzw. D90 sind und eine Partikelgröße einer primären Partikel 1 µm oder weniger ist.

3. Verfahren zur Herstellung eines aktiven Materials für eine Sekundärbatterie mit nichtwässrigem Elektrolyten nach Anspruch 1 oder 2, wobei die Lithium-Verbindung ein Carbonat ist.

4. Verfahren zur Herstellung eines aktiven Materials für eine Sekundärbatterie mit nichtwässrigem Elektrolyten nach einem der Ansprüche 1 bis 3, wobei das Lithium-Übergangsmetall-Verbundoxid eine spezifische BET-Oberfläche von 3,5 bis 6,5 m²/g aufweist.

5. Verfahren zur Herstellung eines aktiven Materials für eine Sekundärbatterie mit nichtwässrigem Elektrolyten nach einem der Ansprüche 1 bis 4, wobei das Lithium-Übergangsmetall-Verbundoxid eine Klopfdichte von 1,65 bis 1,96 g/cm³ aufweist.

6. Aktives Material für eine Sekundärbatterie mit nichtwässrigem Elektrolyten, wobei das aktive Material durch das Verfahren zur Herstellung eines aktiven Materials für eine Sekundärbatterie mit nichtwässrigem Elektrolyten nach einem der Ansprüche 1 bis 5 erhalten werden kann.

7. Elektrode für eine Sekundärbatterie mit nichtwässrigem Elektrolyten, die das aktive Material für eine Sekundärbatterie mit nichtwässrigem Elektrolyten nach Anspruch 6 enthält.

8. Sekundärbatterie mit nichtwässrigem Elektrolyten, welche die Elektrode für eine Sekundärbatterie mit nichtwässrigem Elektrolyten nach Anspruch 7 enthält.

## Revendications

1. Procédé de fabrication d'un matériau actif pour une batterie secondaire à électrolyte non aqueux contenant un oxyde composite d'un métal de transition et de lithium ayant une structure de cristal de type α-NaFeO₂ et étant représenté par une formule de composition Li_{1+α}Me_{1-α}O₂ où Me est un élément métallique de transition contenant du Co, du Ni et du Mn et α > 0, le procédé comprenant les étapes de :
précipitation conjointe, dans une solution, d'un composé d'un élément métallique de transition Me contenant du Co, du Ni et du Mn afin de produire un précurseur de co-précipitation d'un oxyde de métal de transition ;
chauffage préalable du précurseur de co-précipitation entre 300 et 500 °C ; et
mélange du précurseur de co-précipitation préalablement chauffé avec un composé à base de lithium de manière à ce que le rapport molaire du Li par rapport à l'élément métallique de transition Me (Li/Me) dans l'oxyde composite de lithium et de métal de transition soit de 1,2 à 1,4, et que le mélange soit chauffé entre 800 et 1 000 °C,
dans lequel, dans l'oxyde composite de lithium et de métal de transition, D10 est entre 6 et 9 µm, D50 est entre 13 et 16 µm et D90 est entre 18 et 32 µm, où les tailles de particules pour les volumes cumulés de 10 %, 50 % et 90 % dans la distribution des tailles de particules des particules secondaires sont D10, D50 et D90, respectivement, et
la taille de particule d'une particule primaire est inférieure ou égale à 1 µm.

2. Procédé de fabrication d'un matériau actif pour une batterie secondaire à électrolyte non aqueux contenant un oxyde composite d'un métal de transition et de lithium ayant une structure de cristal de type α-NaFeO₂ et étant représenté par une formule de composition Li_{1+α}Me_{1-α}O₂ où Me est un élément métallique de transition contenant du Co, du Ni et du Mn et α > 0, le procédé comprenant les étapes de :
précipitation conjointe, dans une solution, d'un composé d'un élément métallique de transition Me contenant du Co, du Ni et du Mn pour produire un précurseur de co-précipitation d'un carbonate du métal de transition ;
chauffage préalable entre 250 et 750 °C d'une poudre mélangée obtenue en mélangeant le précurseur de co-précipitation avec un composé au lithium de manière à ce que le ratio molaire du Li par rapport à l'élément métallique de transition Me (Li/Me) dans l'oxyde composite de lithium et de métal de transition soit de 1,2 à 1,4 ; et
nouveau mélange de la poudre mélangée préalablement chauffée et chauffage du mélange entre 800 et 1 000 °C,
dans lequel, dans l'oxyde composite de lithium et de métal de transition, D10 est entre 6 et 9 µm, D50 est entre 13 et 16 µm et D90 est entre 18 et 32 µm, où les tailles de particules pour les volumes cumulés de 10 %, 50 % et 90 % dans la distribution des tailles de particules des particules secondaires sont D10, D50 et D90, respectivement, et
la taille de particule d'une particule primaire est inférieure ou égale à 1 µm.

3. Procédé de fabrication d'un matériau actif pour une batterie secondaire à électrolyte non aqueux selon la revendication 1 ou 2, dans lequel le composé au lithium est un carbonate.

4. Procédé de fabrication d'un matériau actif pour une batterie secondaire à électrolyte non aqueux selon l'une quelconque des revendications 1 à 3, dans lequel l'oxyde composite de lithium et de métal de transition a une surface spécifique BET de 3,5 à 6,5 m²/g.

5. Procédé de fabrication d'un matériau actif pour une batterie secondaire à électrolyte non aqueux selon l'une quelconque des revendications 1 à 4, dans lequel l'oxyde composite de lithium et de métal de transition a une densité après tassement entre 1,65 et 1,96 g/cm³.

6. Matériau actif pour une batterie secondaire à électrolyte non aqueux, dans lequel le matériau actif peut être obtenu par le procédé de fabrication du matériau actif pour une batterie secondaire à électrolyte non aqueux selon l'une quelconque des revendications 1 à 5.

7. Electrode pour batterie secondaire à électrolyte non aqueux comprenant le matériau actif pour une batterie secondaire à électrolyte non aqueux selon la revendication 6.

8. Batterie secondaire à électrolyte non aqueux comprenant l'électrode pour batterie secondaire à électrolyte non aqueux selon la revendication 7.
